(19) Europäisches Patentamt
European Patent Office
Office européen des brevets

(11) **EP 1 754 115 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **05813994.0**

(22) Anmeldetag: **16.11.2005**

(51) Int Cl.:
***G05B 19/404*** *(2006.01)*

(86) Internationale Anmeldenummer:
**PCT/EP2005/012280**

(87) Internationale Veröffentlichungsnummer:
**WO 2006/056349 (01.06.2006 Gazette 2006/22)**

(54) **VERFAHREN UND VORRICHTUNG ZUM REGELN, STEUERN VON MANIPULATOREN**

METHOD AND DEVICE FOR ADJUSTING AND CONTROLLING MANIPULATORS

PROCEDE ET DISPOSITIF POUR REGULER ET COMMANDER DES MANIPULATEURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.11.2004 DE 102004056861**

(43) Veröffentlichungstag der Anmeldung:
**21.02.2007 Patentblatt 2007/08**

(73) Patentinhaber: **KUKA Roboter GmbH**
**86165 Augsburg (DE)**

(72) Erfinder:
• **HIETMANN, Gerhard**
**86405 Herbertshofen (DE)**
• **WEISS, Martin**
**86459 Margertshausen (DE)**

(74) Vertreter: **Lempert, Jost**
**Patentanwälte Heiner Lichti,**
**Jost Lempert, Hartmut Lasch**
**Postfach 41 07 60**
**D-76207 Karlsruhe (DE)**

(56) Entgegenhaltungen:
• **ALIN ALBU-SCHÄFFER: "Regelung von Robotern mit elastischen Gelenken am Beispiel der DLR-Leichtbauarme" 2002, TECHNISCHE UNIVERSITÄT MÜNCHEN , MÜNCHEN , XP002371511 Gefunden im Internet: URL:http://tumb1.biblio.tu-muenchen.de/pub l/diss/ei/2002/albu-schaeffer.pdf> [gefunden am 2006-03-10] das ganze Dokument**

**Beschreibung**

Die Erfindung betrifft ein Verfahren zum Regeln oder Steuern eines automatisch gesteuerten Manipulators, wie insbesondere eines Roboters, bei Verwendung eines dynamischen Manipulatormodells unter Berücksichtigung von Reibmomenten, die in zum Bewegen von Achsen des Manipulators vorgesehenen Getrieben auftreten, wobei für wenigstens eine Achse ein Modell für das Getriebe-Reibmoment auf der Grundlage abtriebseitiger Achsgeschwindigkeiten und Achsbeschleunigungen bestimmt und zum Bestimmen von Sollwerten, wie einer Motorposition oder eines Motorstroms, verwendet wird.

Weiterhin betrifft die Erfindung eine Vorrichtung zum Regeln oder Steuern eines automatisch gesteuerten Manipulators, wie insbesondere eines Roboters, der eine Anzahl von Achsen und zu deren Bewegung eine Anzahl von Motoren und Getrieben aufweist, mit einer Steuerungseinheit, die zum Verwenden eines dynamischen Manipulatormodells unter Berücksichtigung von in den Getrieben auftretenden Reibmomenten ausgebildet ist, wobei für wenigstens eine Achse ein Modell für ein betreffendes Getriebe-Reibmoment auf der Grundlage abtriebseitiger Achsgeschwindigkeiten und Achsbeschleunigungen vorgesehen und durch die Steuerungseinheit zum Bestimmen von Sollwerten, wie einer Motorposition oder eines Motorstroms, verwendbar ist.

Darüber hinaus betrifft die Erfindung mögliche Verwendungen einer erfindungsgemäßen Vorrichtung.

Ein automatisch gesteuerter Manipulator ist ein Manipulator mit automatischer Steuerung nach EN ISO 8373, ein Roboter bzw. Industrieroboter ebenfalls nach EN ISO 8373, insbesondere mit drei oder mehr programmierbaren Achsen handelt.

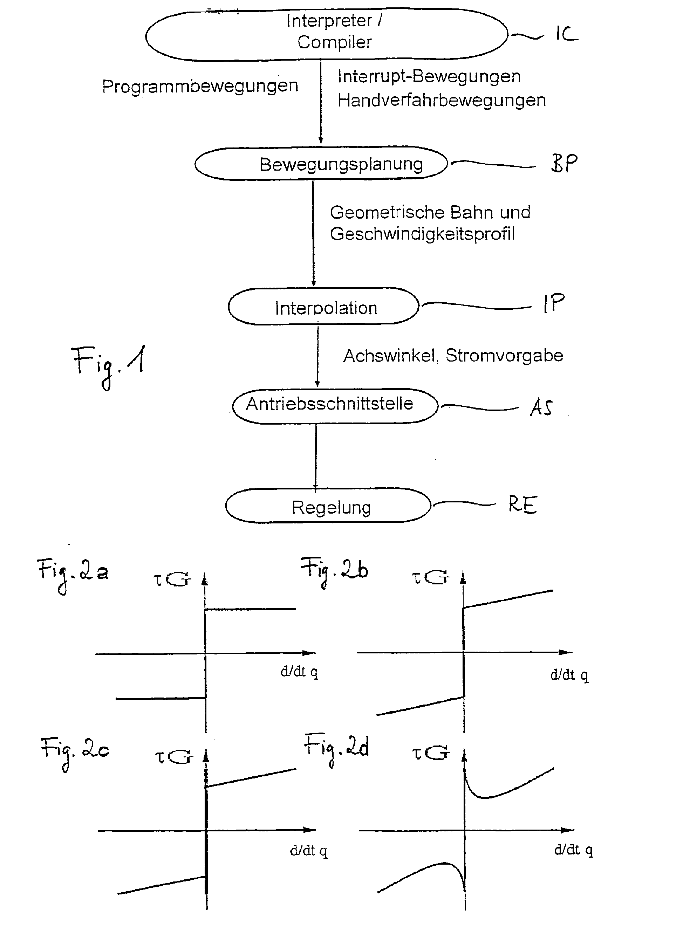

Eine gattungsgemäße Vorrichtung mit Ausführung eines gattungsgemäßen Verfahrens ist aus der Druckschrift Alin Albu-Schäffler, Regelung von Robotern mit elastischen Gelenken am Beispiel der DLR-Leichtbauarme, Lehrstuhl für Steuerungs- und Regelungstechnik, Technische Universität München 2002 bekannt. Robotersteuerungen vorbekannter Art enthalten regelmäßig ein Dynamik-Modell zur (Voraus-)Planung, Regelung und Interpolation von Stellungen des Roboters bzw. von Bewegungen zwischen solchen Stellungen. Im Kontext des vorstehend genannten dynamischen Modells der Bewegung des Roboters bezieht sich der Begriff "Dynamik" auf Momente, Kräfte, Ströme oder dergleichen. Regelmäßig umfasst ein solches Dynamikmodell auch ein Modell für die in beweglichen Teilen des Roboters, insbesondere den Getrieben, auftretenden Reibungskräfte, kurz: Reibung. Zur Erläuterung der Begriffe "Planung", "Regelung" und "Interpolation" sei des Weiteren auf die Beschreibung der Fig. 1 (s.u.) verwiesen. Optimal kann in das Modell als Eingangsgröße auch eine antriebseitige Motortemperatur eines der betreffenden Achse zugeordneten Motors eingehen.

Das Dynamik-Modell wird zum einen dazu verwendet, um aus programmierten Sollwerten für Lasten, aktuelle Position, Geschwindigkeit und Beschleunigung der Manipulatorachsen die (Soll-)Momente an den zum Bewegen der Achsen vorhandenen Motoren und Getrieben zu errechnen. Auf diese Weise kann innerhalb der gegebenen physikalischen Grenzen durch die Steuerungseinheit des Manipulators eine zeitoptimale Bahn geplant werden. Umgekehrt ist es möglich, aus gemessenen Ist-Werten für Strom, Position, Geschwindigkeit, Beschleunigung oder dergleichen eine Schätzung der aktuellen Motor- und Getriebemomente des Roboters zu berechnen, die sich anschließend für Überwachungszwecke verwenden lassen, beispielsweise zum Erkennen von Kollisionen.

Eine weitere Anwendungsmöglichkeit des Dynamik-Modells ist die Berechnung von Vorsteuermomenten entweder im Interpolator oder in der Regelung des Roboters, die auf Soll- und/oder auf Ist-Werten basieren kann.

Dabei hat sich in der Vergangenheit gezeigt, dass die in bzw. an den Motoren und Getrieben herrschenden Temperaturverhältnisse einen großen Einfluss auf die in den Dynamik-Modellen enthaltenen Reibungseinflüsse (Reibmomente) und damit auf den Motorstrom haben, der beispielsweise erforderlich ist, um eine Achse entgegen den Reibungseffekten um ein gegebenes Bewegungsmaß zu bewegen.

Um diesen Effekten zu begegnen, werden bei Verfahren und Vorrichtungen der eingangs genannten Art worst-case-Abschätzungen für temperaturabhängige Größen verwendet. So verändert sich beispielsweise das Getriebe-Reibmoment in Abhängigkeit von den jeweiligen Bewegungen des Roboters und von der Umgebungstemperatur. Zwar ist für die Umgebungstemperatur aus Informationen des Getriebeherstellers ein gewisser zulässiger Bereich bekannt; allerdings kann ein Roboterhersteller keine genauen Annahmen hinsichtlich der tatsächlichen Getriebetemperatur beim Kunden treffen und muss daher in der Robotersteuerung in konservativer Weise von einer maximalen Reibung im Getriebe ausgehen, die durch entsprechendes Motormoment überwunden werden muss. Da jedoch in der Regel das angenommene maximale Reibmoment nicht gegeben ist, bleibt Motormoment ungenutzt und wertvolle Taktzeit des Roboters geht unnötig verloren.

Insbesondere beim Anhalten einer Roboterbewegung zeigt sich ein weiterer Nachteil der nur ungenau bekannten Getriebe-Reibmomente, da gerade nach einem Anhalten beim Wiederanfahren die Reibung erheblich ist und aufgrund von Haftreibungseffekten zu einer ruckweisen Bewegung der Getriebe führt. Derartige Effekte wirken sich des Weiteren nachteilig auf eine ordnungsgemäße Regelung der Manipulatoren aus, da im Falle von Haftreibung das Moment erhalten bleibt, gleichzeitig jedoch keine Bewegung erfolgt, so dass die Regelung durcheinander gerät.

Entsprechende Nachteile ergeben sich auch beim Anfahren von Manipulatoren, insbesondere bei sogenannten SoftServo-Applikationen, bei denen in einem niedrigen Geschwindigkeitsbereich das benötigte Losbrechmoment eines Motors zur Überwindung der Haftreibung möglichst genau anzugeben ist.

Zur Vermeidung der vorstehend aufgezählten Nachteile liegt der Erfindung die Aufgabe zugrunde, das Getriebe-Reibmoment bei Robotern genauer zu bestimmen und diese Information dazu zu benutzen, das Regelungs- und Fahrverhalten des Roboters zu steuern und weiterhin eine verbesserte Ausnutzung des verfügbaren Motormoments des Manipulators, verbunden mit einem Gewinn an Taktzeit aufgrund eines verbesserten Regelungs- und Fahrverhaltens durch eine erhöhte Genauigkeit modellbasierter Roboter-Funktionen, beispielsweise zeitoptimale Planung, Kollisionserkennung oder Lastdatenermittlung, zu ermöglichen.

Die Aufgabe wird bei einem Verfahren der eingangs genannten Art dadurch gelöst, dass das Getriebe-Reibmoment in Abhängigkeit von einer Getriebetemperatur bestimmt wird.

Entsprechend weist eine erfindungsgemäße Vorrichtung zur Lösung der genannten Aufgabe wenigstens eine in Wirkverbindung mit der Steuerungseinheit befindliche Bestimmungseinrichtung für eine Getriebetemperatur auf, deren Ausgangssignal in der Steuerungseinheit zum Bestimmen des Getriebe-Reibmoments auswertbar ist.

Es hat sich beispielsweise herausgestellt, dass zwischen dem Soll- und Ist-Moment eines Motors ein Unterschied von 30 bis 40% bestehen kann, wenn im Rahmen des Dynamik-Modells des Roboters hinsichtlich der Reibung die Temperatur nicht mit berücksichtigt wird. Entsprechend ermöglicht die erfindungsgemäße Berücksichtigung der aufgrund der Getriebereibung gegebenen Getriebetemperatur und deren Eintrag auch in die Struktur, eine flexible Anpassung und Verbesserung des Regelungs- und Fahrverhaltens von Manipulatoren, da erfindungsgemäß keine Beschränkung auf den oben beschriebenen "worst case" erforderlich ist, so dass sich insbesondere Taktzeiten des Roboters flexibler und schneller gestalten lassen und zu einem Zeitgewinn führen.

Nach einer ersten Weiterentwicklung des erfindungsgemäßen Verfahrens ist vorgesehen, dass Getriebetemperaturen direkt gemessen werden. In diesem Zusammenhang kann die Temperaturmessung, insbesondere während eines regelmäßigen Betriebs des Manipulators, d.h. beim Kunden/Endbenutzer erfolgen. Alternativ oder zusätzlich ist vorgesehen, dass die Messung der Getriebetemperatur vor Aufnahme eines regelmäßigen Betriebs des Manipulators erfolgt, wobei dann gegebenenfalls, während des Betriebs beim Endkunden, dies nicht mehr geschehen muss.

Entsprechende Weiterentwicklungen der erfindungsgemäßen Vorrichtung sehen vor, dass die Temperatur-Bestimmungseinrichtung als in das Getriebe integrierbarer Temperatursensor ausgebildet ist und/oder dass die Temperatur-Bestimmungseinrichtung zum Messen einer Temperatur des Getriebeöls ausgebildet ist.

Allerdings kann das Vorsehen zusätzlicher Temperatursensoren an den Achsen der Roboter einer Serie nicht nur aus Kostengründen unerwünscht sein. So lassen sich insbesondere an den Handachsen eines Roboters Temperatursensoren nur schwer verwenden, da hier kaum Einbau- und Verkabelungsmöglichkeiten bestehen. Das Anliegen von Weiterentwicklungen der vorliegenden Erfindung ist es daher, auch ohne Verwendung zusätzlicher Sensorik im Serienprodukt eine zumindest angenäherte Bestimmung der Getriebetemperatur zu ermöglichen und diese - wie vorstehend angesprochen - für verschiedene Steuerungs- und Regelungsvorgänge einzusetzen.

Alternativ ist es daher im Rahmen der vorliegenden Erfindung auch möglich, aus den gefahrenen Geschwindigkeiten und entsprechenden Parametern des Manipulators in Verbindung mit Modellen für die Wärmeleitung in der mechanischen Struktur des Manipulators sowie ggf. zusätzlich für eine Wärmeabstrahlung an die Umgebung auch ohne direkte Temperaturmessung am Getriebe zu einem Schätzwert für die Getriebetemperatur zu gelangen. Dazu ist jedoch die Messung der Umgebungstemperatur erforderlich. Ein entsprechend ausgestaltetes erfindungsgemäßes Verfahren zeichnet sich dadurch aus, dass

a) in bestimmten zeitlichen Abständen antriebseitige Ist-Größen des Manipulators, wie Motorstrom, Motorposition oder Motortemperatur, bestimmt werden;
b) anhand eines Wärmeleitungsmodells in einem regelmäßigen Takt eine Wärmeleitung in der mechanischen Struktur und Wärmeabgabe an die Umgebung des Manipulators ermittelt wird; und
c) aus der Wärmeleitung eine Getriebetemperatur angenähert bestimmt wird.

Bei einer entsprechend ausgebildeten erfindungsgemäßen Vorrichtung kann zu diesem Zweck vorgesehen sein, dass in der Steuerungseinheit (SE) ein Wärmeleitungsmodell verfügbar ist, wobei die Steuerungseinheit (SE) zum Ermitteln einer Wärmeleitung in der mechanischen Struktur des Manipulators (RO) in einem regelmäßigen Takt ausgebildet ist, so dass aus der Wärmeleitung eine Getriebetemperatur ($\vartheta$G) angenähert bestimmbar ist.

Die Vorrichtung ist vorzugsweise derart weitergebildet, dass

a) eine Einrichtung (UTS) zum Bestimmen einer Umgebungstemperatur des Manipulators (RO) in bestimmten zeitlichen Abständen vorgesehen ist; dass
b) die Steuerungseinrichtung (SE) zum Ermitteln einer Wärmeabstrahlung vom Manipulator (RO) an die Umgebung anhand der Umgebungstemperatur in einem regelmäßigen Takt ausgebildet ist; und dass
c) aus der Wärmeleitung und der Wärmeabstrahlung eine Getriebetemperatur ($\vartheta$G) angenähert bestimmbar ist.

Gegenüber einem Verfahren bzw. einer Vorrichtung, bei der ein Roboter serienmäßig mit zusätzlichen Temperatursensoren in bzw. an den Getrieben mit zusätzlichen Getriebesensoren auszurüsten ist, besitzt die zuletzt genannte Ausführungsform der Erfindung den Vorteil, dass lediglich eine geringe Anzahl leicht anzubringender Temperatursensoren für die Umgebungstemperatur erforderlich sind. Allerdings kann sich die Modellbildung für die Wärmeabstrahlung bzw. Wärmeleitung im Einzelfall als schwierig erweisen.

Weiterhin sieht eine äußerst bevorzugte Weiterentwicklung des erfindungsgemäßen Verfahrens vor, dass mittels einer Messung von Werten antriebseitiger Ist-Größen des Manipulators, wie eines Motorstroms oder einer Motorposition, ein Kennfeld des Getriebe-Reibmodells nach Maßgabe der durch Sensoren erfassten Getriebetemperaturen bestimmt wird, anhand dessen anschließend ein Wert der Getriebetemperatur bzw. ein Getriebe-Reibmoment in Abhängigkeit von den antriebseitigen Ist-Größen ermittelt wird. Hierbei ist es insbesondere auch möglich, dass das Kennfeld und das Getriebe-Reibmodell vor Aufnahme eines regelmäßigen Betriebs des Manipulators bestimmt und zur späteren Verwendung gespeichert werden.

Somit kann erfindungsgemäß beim Hersteller einmalig ein Roboter der jeweiligen Serie mit zusätzlichen Temperatursensoren an den Getrieben ausgerüstet und vermessen werden, woraus sich ein Kennfeld bzw. ein parametrisches Modell für die Getriebetemperatur aufstellen lässt, so dass diese anschließend während des regelmäßigen Betriebs des Manipulators anhand anderer Messgrößen desselben ableitbar ist, für die regelmäßig entsprechende Sensoren am Manipulator zur Verfügung stehen.

Dementsprechend besitzt eine erfindungsgemäße Vorrichtung nach einer Weiterbildung eine Bestimmungseinrichtung für ein Kennfeld des Getriebe-Reibmodells nach Maßgabe der Getriebetemperaturen aus Werten antriebseitiger Ist-Größen des Manipulators, wie eines Motorstroms oder einer Motorposition, anhand dessen ein Wert der Getriebetemperatur bzw. ein Getriebe-Reibmoment in Abhängigkeit von den antriebseitigen Ist-Größen durch die Steuerungseinheit ermittelbar ist. Zusätzlich kann eine erfindungsgemäße Vorrichtung noch eine erste Speichereinrichtung für das Kennfeld und das Getriebe-Reibmodell zur späteren Verwendung durch die Steuerungseinheit während eines regelmäßigen Betriebs des Manipulators aufweisen.

Erfindungsgemäß ist es somit grundsätzlich auf drei Arten möglich, zu einem Wert für die Getriebetemperatur zu gelangen, der sich anschließend im Rahmen des Reibmodells einsetzen lässt: 1) direktes Messen während des regelmäßigen Roboterbetriebs; 2) näherungsweises Bestimmen anhand typischerweise verfügbarer Ist-Größen des Roboters, ggf. anhand eines Kennfeldes; und/oder 3) anhand einer thermischen Modellbildung, ggf. mit Messung der Umgebungstemperatur. Ausgehend von den gemessenen Ist-Größen lässt sich anschließend bei den Verfahren 2) und 3) -wie bereits angesprochen in der Robotersteuerung über ein numerisches Optimierungsverfahren der zeitliche Verlauf gemessener Ist-Größen mit dem ermittelten Kennfeld bzw. einem parametrischen Modell bestmöglich zur Deckung bringen, indem die angenommene Getriebetemperatur entsprechend variiert wird. Die entsprechenden Ausgestaltungen des erfindungsgemäßen Verfahrens bzw. der erfindungsgemäßen Vorrichtung sind Gegenstand weiterer Unteransprüche und werden im Folgenden noch detailliert erläutert. Der gefundene Optimalwert für die Getriebetemperatur kann dann erfindungsgemäß für weitere Zwecke in der Steuerung verwendet werden.

Zur Erläuterung der vorstehend angesprochenen Zusammenhänge werden im Folgenden die nachstehend aufgeführten Bezeichnungen verwendet:

$q_M$: motorseitige (= antriebsseitige) Position
$q_G$: getriebeseitige (= abtriebs-, achsseitige) Position
$\vartheta_M$: Motortemperatur
$\vartheta_G$: Getriebetemperatur
$\tau_M$: antriebsseitiges Moment bzw. Motormoment
$\tau_G$: abtriebsseitiges Moment bzw. Getriebemoment
I: Motorstrom
R: Getriebeübersetzung; für nicht-elastische Getriebe gilt $q_M = q_G * R$
$\tau_{RG}$: dem Getriebe zugeordnetes Reibmoment
$\tau_{RM}$: dem Motor zugeordnetes Reibmoment
J: Lastträgheit

Zur Unterscheidung zwischen Soll- und Ist-Werten lassen sich die vorstehend aufgeführten Bezeichnungen aller Größen noch um einen Index "soll" bzw. "ist" erweitern.

Des Weiteren wird zur Erläuterung der Erfindung im Folgenden nur auf eine einzelne rotatorische Achse Bezug genommen. Jedoch ist die Erfindung selbstverständlich für mehrachsige Manipulatoren mit einer beliebigen Anordnung von rotatorischen und linearen Achsen verwendbar.

Es wird für die Reibmomente der folgende funktionale Zusammenhang angenommen:

$$\tau RG = \tau RG\left(d/dt\, qG, d/dt^2\, qG, \vartheta G, \tau G\right). \tag{1}$$

Demnach ist das Reibmoment am Getriebe ein Funktion von Achsgeschwindigkeit, Achsbeschleunigung, Getriebetemperatur und Lastmoment am Getriebe. Da die Getriebetemperatur nach dem Vorstehenden in der Regel bei Betrieb des Roboters nicht direkt gemessen werden kann, ist dieses Reibmoment das am schwierigsten zu beschreibende.

Für das Reibmoment am Motor besteht der folgenden funktionale Zusammenhang,

$$\tau RM = \tau RM\left(d/dt\, qM, d/dt^2\, qM, \vartheta M\right), \tag{2}$$

in Form einer Funktion von Motorgeschwindigkeit, Motorbeschleunigung und Motortemperatur.

Ein konkretes Beispiel für das Reibmoment am Getriebe ist:

$$\tau RG = \tau RG\left(d/dt\, qG, d/dt^2\, qG, \vartheta G, \tau G\right)$$
$$= a1\left(\vartheta G\right)\cdot \mathrm{sign}\left(d/dt\, qG\right) + a2\left(\vartheta G\right)\cdot d/dt\, qG + a3\left(\vartheta G\right)\cdot d/dt^2\, qG \tag{3}$$

Dementsprechend setzt sich die Getriebereibung aus drei unterschiedlichen Reibungstermen zusammen, nämlich einem

- Haftreibungsterm (Festkörperreibung) : $a1(\vartheta G)\cdot\mathrm{sign}(d/dtqG)$ mit temperaturabhängigem Koeffizienten a1;
- Gleitreibungsterm (viskose-Reibung): $a2(\vartheta G)\cdot d/dtqG$ mit temperaturabhängigem Koeffizienten a2; und
- Eisenverlustterm: $a3(\vartheta G)\cdot d/dt^2\, qG$ mit temperaturabhängigem Koeffizienten a3.

Nach dem Stand der Technik sind sowohl einfache Modelle (z.B. ohne Eisenverlustterm) als auch komplexere Modelle möglich (siehe z.B. Olsson, Åström, C. Canudas, de Wit, M. Gäfvert, P. Lischinsky: Friction Models and Friction Compensation, European Journal of Control, 29(4), 1998, pp. 176 - 195).

Bei Annahme eines starren Gelenks ohne Getriebeelastizitäten und einer im Strom linearen Motorkennlinie gemäß $\tau M = k_T\cdot I$ gilt unabhängig vom Reibungsmodell:

$$\tau G = \left(I\cdot k_T - \tau RM\right)\cdot R - \tau RG, \tag{4}$$

d.h. das Getriebemoment entspricht der Differenz aus Motormoment und Motorreibmoment multipliziert mit der Getriebeübersetzung, wobei anschließend noch das Getriebereibmoment abzuziehen ist.

Nach dem Stand der Technik verwenden Robotersteuerungen entweder vollständig temperaturunabhängige Reibmomente, z.B. in der Form

$$\tau RG\left(d/dt\, qG, d/dt^2\, qG, \vartheta G, \tau G\right)$$
$$= a1\cdot \mathrm{sign}\left(d/dt\, qG\right) + a2\cdot d/dt\, qG + a3\cdot d/dt^2\, qG \tag{5}$$

bzw. Modelle, bei denen die Motortemperatur als Schätzung für die Getriebetemperatur eingeht:

$$\tau RG\left(d/dt\,qG, d/dt^2\,qG, \vartheta M, \vartheta G, \tau G\right)$$
$$= a1\left(\vartheta M\right)\cdot \text{sign}\left(d/dt\,qG\right) + a2\left(\vartheta M\right)\cdot d/dt\,qG + a3\left(\vartheta M\right)\cdot d/dt^2\,qG \tag{6}$$

Allerdings ist die Verwendung der Motortemperatur als einfacher Schätzwert für die Getriebetemperatur in der Regel unzulässig, wie sich anhand einer stillstehenden Achse unter Schwerkrafteinfluss einfach verdeutlichen lässt: Um eine Last unter Schwerkrafteinfluss in Position zu halten, muss ein entsprechender Motor eine gewisse Kraft aufbringen, wobei elektrische Energie in den Motor eingebracht wird und diesen erwärmt. Die Last und das Getriebe stehen dabei still, so dass keine geschwindigkeitsabhängige Reibung während einer Bewegung anfällt, die den Hauptgrund der Erwärmung eines Getriebes darstellt. Doch ist die Wärmeentwicklung am Motor erheblich, so dass dieser überhitzen würde. In der Praxis halten daher motorseitige Bremsen den Roboter, sobald er sich über eine Zeitdauer von ca. 30 Sekunden oder mehr nicht bewegt.

Hierauf aufbauend liegt der Erfindung - wie bereits vorstehend angesprochen - der Kerngedanke zugrunde, dass der Roboterhersteller an einem oder mehreren speziell mit Temperatursensoren im Getriebe ausgerüsteten Roboter ein Kennfeld für das temperaturabhängige Getriebe-Reibmodell erstellt, um so auf den kostennachteiligen serienmäßigen Einbau von Temperatursensoren im Getriebe des Roboters verzichten zu können. Serienmäßige Roboter verwenden anschließend in ihren Steuerungen dieses Kennfeld, um aus einem zeitlichen Verlauf gemessener Ist-Größen, wie sie bereits nach dem Stand der Technik zur Verfügung stehen, d.h. dem Motorstrom und/oder der Motorposition, bei einer plausiblen Annahme einer relativ zu Bewegungszeiten des Roboters nur langsam variierenden Getriebetemperatur über ein Optimierungsverfahren letztere angenähert zu bestimmen und diese anschließend zu Steuerungs-, Regelungs- oder Überwachungszwecken weiter zu verwenden.

Mit einem derart ausgerüsteten Roboter werden entsprechend Messfahrten durchgeführt, die den kompletten Bereich der Eingangsgrößen des Reibmodells abdecken. Die Ist-Werte für Position und die daraus ermittelte Geschwindigkeit, die Motortemperatur und die Getriebetemperatur werden während dieser Messfahrten zyklisch erfasst, wobei die Abtastrate typischerweise im Bereich von einer Millisekunde liegt, und in einer Datei in einem externen Speicher abgelegt. Danach wird aus den gemessenen Ist-Werten das Reibmodell $\tau$RM bzw. $\tau$RG gemäß den Gleichungen 1 und 2 ermittelt und entweder in Form einer Tabelle oder eines parametrisierten Modells wiederum im (externen) Speicher abgelegt. Die entsprechenden Parameter des Modells lassen sich ebenfalls aus den Messungen ermitteln, z.B. über ein Least-Squares-Verfahren.

Die Speicherung der genannten Ist-Werte sowie die zur Aufstellung des Modells erforderlichen Berechnungsschritte werden bevorzugt durch eine Recheneinheit der Steuerungseinheit des Roboters selbst durchgeführt. Es ist jedoch auch möglich, die genannten Verfahrensschritte auf einem separaten externen Rechner ablaufen zu lassen.

Ergebnis der vorstehend geschilderten (Offline-)Vorarbeiten ist erfindungsgemäß ein Getriebe-Reibmodell $\tau$RG in Abhängigkeit von den verschiedenen Einflussgrößen, zu denen nach dem Wesen der Erfindung explizit auch die Getriebetemperatur $\vartheta$G gehört:

$$\tau RG\left(qG, d/dt\,qG, d/dt^2\,qG, \vartheta G, \mathrm{K}\right), \tag{7}$$

wobei weitere Einflussgrößen durch die Punkte in Gleichung 7 angedeutet sind.

Das vorstehend erläuterte Reibmodell wird gemäß der vorliegenden Erfindung anschließend "online", d.h. im Betrieb der Steuerung bzw. des Roboters zur Verbesserung des Steuerungs- und Regelungsverhaltens eingesetzt. Dabei ist es natürlich grundsätzlich möglich, den Roboter auch während seines regelmäßigen Betriebs mit zusätzlichen Temperatursensoren in bzw. an den Getrieben auszustatten, und so die Getriebetemperatur $\vartheta$G über Sensoren, z.B. im Getriebeöl, direkt zu messen. Erfindungsgemäß lassen sich dann über das zuvor aufgestellte Reibmodell die Reibmomente des Manipulators und deren Auswirkung auf das Bewegungsverhalten sehr genau bestimmen. Eine entsprechende Weiterentwicklung des erfindungsgemäßen Verfahrens sieht demnach vor, dass bei einer Vorausplanung einer Folge wechselnder Manipulatorstellungen, insbesondere hinsichtlich Geometrie, Zeitverlauf und Geschwindigkeiten einer Bewegung, auftretende Werte von Soll-Größen, wie eines Motorstroms oder einer Motorposition, unter Verwendung der Getriebetemperatur bestimmt werden. Der Begriff "(Voraus-)Planung" bezieht sich im Rahmen dieser Erfindung auf Geometrie und Zeitverlauf von wechselnden Roboterpositionen, wobei mit letzterem insbesondere eine Geschwindigkeitsplanung gemeint ist. Erfindungsgemäß kann die Planung somit insbesondere zeitoptimiert durchgeführt werden, indem zu Beginn der Planung eines jeden Satzes von Bewegungen oder dergleichen die Ist-Temperaturen $\vartheta M_{ist}$ und $\vartheta G_{ist}$ fixiert werden. Auftretende Momente werden unter Verwendung dieser Temperaturen bestimmt.

Im Zuge einer besonders bevorzugten Weiterentwicklung des erfindungsgemäßen Verfahrens kann darüber hinaus vorgesehen sein, dass vor Beginn einer Interpolation einer entsprechenden Stellungsfolge eine Neuplanung erfolgt, wenn zwischen der Vorausplanung und der Interpolation eine Zeit vergangen ist, die eine vorgegebene Zeitschwelle übersteigt, wobei der Begriff "Interpolation" die Abtastung von Positionen und die Interpolation zwischen ihnen beinhaltet. Tritt also zwischen der Planung und der Interpolation eines Satzes eine Unterbrechung auf, die hinreichend lange dauert, so dass eine Abkühlung der Motoren und Getriebe zu erwarten ist, so erfolgt bei einem anschließenden Neustart automatisch auch eine Neuplanung.

Weiterbildungen des erfindungsgemäßen Verfahrens sehen darüber hinaus vor, dass bei einer Interpolation von Manipulatorstellungen und/oder bei einer Regelung auftretende Werte von Soll-Größen, wie eines Motorstroms oder einer Motorposition, unter Verwendung der Getriebetemperatur bestimmt werden. Damit können erfindungsgemäß sowohl in der Interpolation als auch in der Regelung die (Vorsteuer-)Momente unter Verwendung der aktuellen Ist-Temperaturen berechnet werden.

Eine zur Durchführung der vorstehend genannten Verfahren ausgebildete erfindungsgemäße Vorrichtung kann sich insbesondere durch eine Zeitmesseinrichtung auszeichnen, die bei einer Vorausplanung einer Folge wechselnder Manipulatorstellungen, insbesondere hinsichtlich Geometrie, Zeitverlauf und Geschwindigkeiten einer Bewegung, durch die Steuerungseinheit zum Bewirken einer Neuplanung ausgebildet ist, wenn eine zwischen der Vorausplanung und einer Interpolation der Stellungsfolge vergangene Zeit eine vorgegebene Zeitschwelle übersteigt.

Ein besonderes Anliegen der vorliegenden Erfindung ist es jedoch, eine Berücksichtigung der Getriebetemperatur auch ohne direktes Messen dieser Temperatur während des regelmäßigen Betriebs eines Roboters zu erreichen, um auch weiterhin aus Kostengründen auf ein zusätzliches Anbringen von serienmäßigen Temperatursensoren für die Getriebe verzichten zu können. Temperatursensoren in den Motoren des Roboters sind jedoch nach wie vor vorhanden, so dass im Rahmen der Erfindung während des Roboterbetriebs regelmäßig Ist-Werte jedenfalls für die folgenden Einflussgrößen erfassbar sind:

- Motorposition $qM_{ist}$, und daraus abgeleitet Motorgeschwindigkeit $d/dt\, qM_{ist}$, Motorbeschleunigung $d/dt^2\, qM_{ist}$
- Achsposition $qG_{ist}$, Achsgeschwindigkeit $d/dt\, qG_{ist}$ und Achsbeschleunigung $d/dt^2\, qG_{ist}$ durch Umrechnung aus motorseitigen Werten (Getriebeübersetzung, evtl. unter Berücksichtigung der Getriebeelastizität; s.o., Gleichung 4)
- Motorstrom $I_{ist}$
- Motortemperatur $\vartheta M_{ist}$.

Hierbei wird im Folgenden angenommen, dass die Getriebetemperatur $\vartheta G$ aufgrund fehlender zusätzlicher Sensorik nicht direkt messbar ist.

Weiterhin sei im Folgenden angenommen, dass das Reibmoment stetig von der Temperatur abhängt und dass die Temperaturen von Motoren und Getrieben sich im Vergleich zu den Taktzyklen einer (Roboter-)Steuerung nur langsam ändern. Die letzte Annahme ist gerechtfertigt, da ein Roboter erfahrungsgemäß mindestens 30 Minuten benötigt, um bei einer Umgebungstemperatur von etwa 20°C die maximalen Temperaturen von 120°C an den Motoren und 70°C an den Getrieben zu erreichen. Demnach ändert sich die genannte Temperatur innerhalb eines Bewegungssatzes mit einer typischen Dauer von weniger als einer Sekunde um weniger als 0,05°C.

Der Beginn des erfindungsgemäßen Verfahrens sei hinsichtlich seines Zeitpunkts mit t_act = 0 bezeichnet, wobei angenommen wird, dass entweder nach einem längeren Stillstand der Motoren die nicht messbare Getriebetemperatur und die ebenfalls nicht messbare Umgebungstemperatur übereinstimmen oder dass die Getriebetemperatur nach einem kürzeren Stillstand über ein einfaches Wärmeflussmodell in der Roboterstruktur über die Stillstandszeit näherungsweise ermittelbar ist. Durch die weiter unten beschriebene Optimierung kommt in der Regel auch eine sinnvolle Temperaturschätzung zustande, wenn kein näherungsweise korrekter Startwert vorliegt. Numerische Verfahren profitieren aber von guten Startwerten.

Auf dieser Grundlage sieht eine vorteilhafte Weiterbildung des erfindungsgemäßen Verfahrens vor, dass in regelmäßigen zeitlichen Abständen quasi-kontinuierlich antriebseitige Ist-Größen des Manipulators, wie ein Motorstrom oder eine Motorposition, bestimmt und deren Werte während einer vorgegebenen Zeitdauer gespeichert werden, wobei die Speicherungs-Zeitdauer größenordnungsmäßig klein gegen eine Zeitskala für Änderungen der Getriebetemperatur ist (d.h. die Getriebetemperatur ist näherungsweise konstant während der Speicherungs-Zeitdauer) und dass im Takt eines vorgegebenen Zeitintervalls eine angenäherte Bestimmung der Getriebetemperatur erfolgt, wobei zur Bestimmung die im Zeitpunkt der Bestimmung gespeicherten Werte der Ist-Größen verwendet werden. Vorzugsweise werden dabei die Speicherungs-Zeitdauer und das Bestimmungs-Zeitintervall in derselben Größenordnung gewählt.

Entsprechende Weiterbildungen einer erfindungsgemäßen Vorrichtung zeichnen sich durch eine zweite Speichereinrichtung aus, die zum quasi-kontinuierlichen Speichern von Werten antriebseitiger Ist-Größen des Manipulators, wie eines Motorstroms oder einer Motorposition, in regelmäßigen zeitlichen Abständen und zum Halten der Werte während einer vorgegebenen Zeitdauer ausgebildet ist, wobei die Zeitdauer größenordnungsmäßig klein gegen eine Zeitskala für Änderungen der Getriebetemperatur ist. Dabei beträgt die Speicherungs-Zeitdauer vorteilhafter Weise 0,1 s bis 1 s, vorzugsweise etwa 0,5 s.

Nach einer besonders bevorzugten Ausgestaltung der erfindungsgemäßen Vorrichtung ist die zweite Speichereinrichtung als Ringpuffer ausgebildet. Des Weiteren kann die Steuerungseinheit zum angenäherten Bestimmen der Getriebetemperatur im Takt eines vorgegebenen Zeitintervalls ausgebildet sein, wobei zur Bestimmung die im Zeitpunkt der Bestimmung in der zweiten Speichereinrichtung gespeicherten Werte auswertbar sind. Dabei sind die Speicherungs-Zeitdauer und das Bestimmungs-Zeitintervall vorzugsweise von derselben Größenordnung.

Erfindungsgemäß wird demnach ein Beobachtungszeitraum T festgelegt (beispielsweise mit einer Länge T = 0,5 Sekunden), dessen zeitliche Dauer "klein" im Vergleich zu derjenigen Zeitskala ist, auf der sich die Temperatur des Roboters (der Motoren und Getriebe) ändert, wie bereits vorstehend ausgeführt wurde. Deutliche Temperaturänderungen sind erst im Minutenbereich zu erkennen. Allerdings ist der Beobachtungszeitraum T zugleich "groß" gegenüber einer Zeitskala der Regelung, da der Regelungstakt bei heutigen Manipulatoren im Bereich von nur wenigen Millisekunden liegt. In diesem kurzen Takt ist die Steuerungseinheit in der Lage, Positionsdaten und Temperaturen quasi-kontinuierlich zu erfassen.

Die messbaren Größen $d/dt\,qM$, $d/dt^2\,qM$ und $\vartheta M$ werden vorzugsweise in einem Ringpuffer abgelegt, das den Signalverlauf dieser Größen innerhalb, d.h. für die Dauer einer Zeit T bis zur aktuellen Zeit T_act speichert, d.h. die Speicherung erfolgt und besteht innerhalb eines gleitenden Fensters der Länge T: [t_act-T,t_act].

Im Takt eines frei definierbaren Zeitintervalls $\Delta$T wird anhand des zuvor aufgestellten Modells eine neue Schätzung der Getriebetemperatur errechnet, wobei die kleinstmögliche sinnvolle Wahl für das Zeitintervall $\Delta$T der Reglertakt der Robotersteuerung ist. Vorteilhafter Weise sind jedoch $\Delta$T und T von der selben Größenordnung, da der weiter unten beschriebene Optimierungsalgorithmus zeitaufwändig zu berechnen ist, so dass ein Verfahrensablauf mit einem Zeitintervall $\Delta$T in der Größenordnung des Reglertakts nach dem heutigen Entwicklungsstand kaum ausführbar wäre. Andererseits ändert sich jedoch die Temperatur nur langsam, so dass - wie gesagt - eine Auswertung mit $\Delta$T $\approx$ 1 s ausreicht.

Zwischen Motormoment, Reibmomenten und Getriebemoment besteht der folgende formelmäßige Zusammenhang:

$$\tau G = \left(\tau M - \tau RM\right)\cdot R - \tau RG\ ,\qquad\qquad(8)$$

was zu der weiter oben angegebenen Gleichung 4 äquivalent ist. Nach weiterer Umformung ergibt sich

$$I = \left(1/k_T\right)\cdot\left(\left(1/R\right)\cdot\left(\tau G + \tau RG\right) + \tau RM\right)\ .\qquad\qquad(9)$$

Somit kann bei vorliegenden Werten für die Argumente der Reibmodelle $\tau RG$ und $\tau RM$ ein Motorstrom errechnet werden. Wegen

$$\tau RG = \tau RG\left(qG, d/dt\,qG, d/dt^2\,qG, \vartheta G\right)$$

$$\tau G = \tau G\left(qG, d/dt\,qG, d/dt^2\,qG, J\right)\qquad\qquad(10)$$

$$\tau RM = \tau RM\left(qM, d/dt\,qM, d/dt^2\,qM, \vartheta M, \text{K}\right)\qquad\qquad(11)$$

kann bei bekannten Größen

$$qG, d/dt\,qG, d/dt^2\,qG, \vartheta G, J, qM, d/dt\,qM, d/dt^2\,qM, \vartheta M$$

nach Gleichung 9 auch der Soll-Strom berechnet werden. Messbar sind von den aufgeführten Variablen regelmäßig jedoch nur die Motorposition qM und deren Ableitungen, die Getriebeposition qG und deren Ableitungen, die Motortemperatur $\vartheta M$ sowie das Ist-Motormoment bzw. der Ist-Motorstrom. Für die unbekannte Getriebetemperatur $\vartheta G$ wird er-

findungsgemäß eine Variable gleichen Namens eingeführt, die in das oben beschriebene Getriebe-Reibmodell eingesetzt wird. Jedem hypothetischen Wert von $\vartheta G$ kann dann erfindungsgemäß das Getriebe-Reibmoment $\tau RG$ zugeordnet bzw. über Gleichung 9 der Strom zu diesem Temperaturwert ermittelt werden.

Hierzu zeichnet sich das erfindungsgemäße Verfahren nach einer bevorzugten Weiterbildung dadurch aus, dass das Bestimmen der Getriebetemperatur durch Minimierung des Werts eines Ausdrucks

$$\int_{t\_act-T}^{t\_act}\left|I_{soll}\left(\vartheta G; d/dt\, qG(t), d/dt^2\, qG(t), \vartheta M(t), \tau G(t)\right) - I_{ist}(t)\right|^2 w(t)\, dt$$

$$= \int_{t\_act-T}^{t\_act}\left|\tau M_{soll}\left(\vartheta G; d/dt\, qG(t), d/dt^2\, qG(t), \vartheta M(t), \tau G(t)\right)/k_T - I_{ist}(t)\right|^2 w(t)\, dt$$

$$= \int_{t\_act-T}^{t\_act}\left|\begin{array}{c}\left((\tau G + \tau RG)/R - \tau RM\right)_{soll} \times \\ \times\left(\vartheta G; d/dt\, qG(t), d/dt^2\, qG(t), \vartheta M(t), \tau G(t)\right)/k_T - I_{ist}(t)\end{array}\right|^2 w(t)\, dt$$

$$(12)$$

nach $\vartheta G$ erfolgt, wobei

| | |
|---|---|
| t | die Zeitkoordinate; |
| t_act | einen aktuellen Zeitpunkt; |
| T | die Speicherungs-Zeitdauer; |
| $I_{soll}$ | einen Soll-Motorstrom; |
| $\vartheta G$ | die zu bestimmende Getriebetemperatur; |
| qG(t) | eine zeitabhängige abtriebseitige Position; |
| $\vartheta M(t)$ | die zeitabhängige Motortemperatur; |
| $\tau G(t)$ | ein zeitabhängiges abtriebseitiges Moment; |
| $I_{ist}(t)$ | einen zeitabhängigen Ist-Motorstrom; |
| w(t) | eine zeitabhängige Gewichtungsfunktion; |
| $\tau M_{soll}$ | ein antriebseitiges Soll-Moment; |
| $k_T$ | einen Proportionalitätsfaktor gemäß $\tau M = k_T \cdot I$; |
| d/dt qG(t) | die erste Ableitung der abtriebseitigen Position nach der Zeit, d.h. eine abtriebseitige Geschwindigkeit; und |
| $d/dt^2$ qG(t) | die zweite Ableitung der abtriebseitigen Position nach der Zeit, d.h. eine abtriebseitige Beschleunigung |

bezeichnet.

Ein besonderer Vorteil dieses Verfahrens ist, dass in die Ermittlung des Getriebe-Reibmoments zur Steuerung und Regelung des Roboters die Getriebetemperatur eingeht, ohne dass weitere näherungsweise Annahmen bezüglich des Zustandekommens, beispielsweise durch Wärmeflüsse oder dergleichen, erforderlich wären.

Das vorstehend angegebene Minimierungsproblem liefert demnach diejenige Getriebetemperatur, durch die sich ein Signalverlauf der gemessenen Ist-Größen während der Vergangenheit am besten erklären lässt. Die Auswertung des Integrals in Gleichung 12 lässt sich auf einer Recheneinheit der Steuerungseinheit über Quadraturformeln, d.h. gewichtete Summen, berechnen, in die die an endlich vielen, festen Zeitpunkten während des Zeitintervalls [t_act-T,t_act] gemessenen Ist-Werte eingehen, die - wie gesagt - vorzugsweise in einem Ringpuffer abgelegt sind.

Diejenige geschätzte Getriebetemperatur, bei der das Integral seinen minimalen Wert annimmt, wird als neue Getriebetemperatur für den gegenwärtigen Zeitpunkt t_act verwendet.

Die vorstehend angegebene Optimierung erfolgt numerisch. Um einen akzeptablen Startwert für die numerische Optimierung zu erhalten, zeichnet sich eine Weiterbildung des erfindungsgemäßen Verfahrens dadurch aus, dass als Startwert für die numerische Minimierung des Ausdrucks ein zuletzt ermittelter Wert der Getriebetemperatur verwendet wird. Eine Initialisierung nach einem Kaltstart der Steuerung kann beispielsweise auf eine mittlere vom Hersteller spezifizierte Umgebungstemperatur erfolgen. In der Gleichung 12 stellt der Term w(t) eine Gewichtungsfunktion dar, durch deren konkrete Ausgestaltung sich z.B. die weiter entfernte Vergangenheit schwächer gewichten lässt. Möglich ist jedoch auch die Verwendung einer konstanten Gewichtungsfunktion mit w = 1. Darüber hinaus ist auch die Verwendung einer von Gleichung 12 völlig verschiedenen Norm zur Gewichtung des Unterschieds der Ist- und Soll-Stromsignale als die dort gezeigte gewichtete L2-Norm möglich.

Sollte die Minimierung des Integrals nach Gleichung 12 kein eindeutiges Ergebnis liefern, kann ein beliebiger Wert $\vartheta G$ verwendet werden, bei dem das Integral seinen Minimalwert annimmt. In diesem Fall hat die Temperatur in einem weiten Bereich einen gleichmäßigen Einfluss auf die Reibung, bei der es sich letztendlich um den eigentlich steuerungsrelevanten Steuerungsparameter handelt, für den die Temperatur strenggenommen nur eine Hilfsgröße der Bestimmung darstellt.

Wie bereits vorstehend beschrieben, wird die geschätzte Getriebetemperatur erfindungsgemäß allen Planungs-, Interpolations- und Regelungsverfahren zur Verfügung gestellt, so dass abhängig von der geschätzten Getriebetemperatur Strom-und Positionsvorgaben für die Motoren des Roboters bestimmbar sind.

Nach einer alternativen Ausgestaltung des erfindungsgemäßen Verfahrens ist vorgesehen, dass das Bestimmen der Getriebetemperatur durch Minimierung des Werts eines Ausdrucks

$$\left|\tau M_{soll}\left(\vartheta G; d/dt\, qG(t), d/dt^2\, qG(t), \vartheta M(t), \tau G(t)\right) - \tau M_{ist}(t)\right|^2 \qquad (13)$$

erfolgt, wobei wiederum

| | |
|---|---|
| t | die Zeitkoordinate; |
| $\vartheta G$ | die zu bestimmende Getriebetemperatur; |
| $qG(t)$ | eine zeitabhängige abtriebseitige Position; |
| $\vartheta M(t)$ | die zeitabhängige Motortemperatur; |
| $\tau G(t)$ | ein zeitabhängiges abtriebseitiges Moment; |
| $I_{ist}(t)$ | einen zeitabhängigen Ist-Motorstrom; |
| $\tau M_{soll}$ | ein antriebseitiges Soll-Moment; |
| $\tau M_{ist}$ | ein antriebseitiges Ist-Moment; |
| $d/dt\, qG(t)$ | die erste Ableitung der abtriebseitigen Position nach der Zeit, d.h. eine abtriebseitige Geschwindigkeit; und |
| $d/dt^2\, qG(t)$ | die zweite Ableitung der abtriebseitigen Position nach der Zeit, d.h. eine abtriebseitige Beschleunigung |

bezeichnet.

Auf diese Weise ist insbesondere eine zweite Speichereinrichtung, beispielsweise in Form eines Ringpuffers, nicht erforderlich, da die Optimierung lediglich lokal erfolgt, wobei nur punktuelle Informationen bezüglich eines Ist-Zustands des Manipulators in das Verfahren einfließen. Mit anderen Worten: Statt eines Integrals über einen verflossenen Zeitraum wird jeweils zur aktuellen Ist-Situation optimiert.

Als Startwert für die ebenfalls numerische Optimierung des Ausdrucks gemäß der Gleichung 13 eignet sich dabei entsprechend den obigen Ausführungen wiederum der Wert der zuletzt erfolgten Temperaturschätzung. Um trotz der lediglich lokalen Optimierung ein akzeptables Ergebnis der Temperaturschätzung zu erreichen, müssen die in Gleichung 13 eingehenden Eingangssignale möglicherweise geglättet bzw. gefiltert werden.

Gegenüber der weiter oben beschriebenen Optimierung mit wanderndem Zeitfenster liefert die Gleichung 13 eine wesentlich einfachere Bestimmung des Minimierungskriteriums zur Abschätzung der Getriebetemperatur. Als Nachteil muss dabei ggf. ein Oszillieren der Temperatur-Schätzwerte in Kauf genommen werden.

Weitere Einzelheiten und Vorteile der Erfindung ergeben sich aus der nachfolgenden Beschreibung von Ausführungsbeispielen anhand der Zeichnung. Es zeigt:

Fig. 1        ein Ablaufdiagramm betreffend Planung, Interpolation und Regelung in einer Robotersteuerung;

Fig. 2a-d        die Abhängigkeit des Getriebemoments $\tau G$ von der (abtriebsseitigen) Geschwindigkeit $d/dt\, q$;

Fig. 3        ein Blockdiagramm betreffend den Datenfluss bei den erfindungsgemäßen Offline-Messungen zum Erstellen eines Reibmodells;

Fig. 4        ein Block-/Ablaufdiagramm betreffend das erfindungsgemäße Verfahren mit Getriebe-Temperatursensoren;

Fig. 5        eine der Fig. 4 entsprechenden Darstellung, jedoch ohne Temperatursensoren in den Getrieben;

Fig. 6a-e        graphische Darstellungen verschiedener zeitvariabler roboterspezifischer Größen zur Bestimmung der Getriebetemperatur; und

Fig. 7       ein Block-/Ablaufdiagramm betreffend den Datenfluss bei Messung einer Umgebungstemperatur.

Die Fig. 1 dient dazu, anhand eines vereinfachten Ablaufdiagramms den verfahrensmäßigen Zusammenhang der im Rahmen der vorliegenden Anmeldung wiederholt gebrauchten Begriffe "Planung", "Interpolation" und "Regelung" zu erläutern.

Ein in Steuerung eines Roboters, insbesondere eines Industrieroboters, regelmäßig vorhandener Interpreter/ Compiler IC ist dazu ausgebildet, Bewegungen des Manipulators, wie programmierte Bewegungen (Programmbewegungen), Handverfahrbewegungen oder Interrupt-Bewegungen, in eine Bewegungsplanung für den Roboter umzusetzen, wobei unter Planung - wie gesagt - eine (Voraus-)Planung von wechselnden Roboterpositionen hinsichtlich Geometrie und Zeitverlauf, wie insbesondere eine Geschwindigkeitsplanung, verstanden wird. Eine derartige Bewegungsplanung erfolgt gemäß der Fig. 1 in einem Schritt BP und liefert entsprechend eine geometrische Bahn und ein Geschwindigkeitsprofil für eine Bewegung des Manipulators. Anschließend erfolgt eine Interpolation IP der ermittelten Roboterpositionen, worunter eine Abtastung der Positionen verstanden wird. Ergebnis der Interpolation IP sind Werte für Achswinkel des Manipulators und entsprechende Stromvorgaben für dessen Antriebe, die gemäß der Fig. 1 über eine Antriebsschnittstelle AS erfindungsgemäß insbesondere zu Steuerungs-, Regelungs- und Überwachungszwecken in der Regelung RE des Manipulators verwendbar sind. Unter "Regelung" eines Roboters wird dabei gemäß der allgemeinen Definition ein Vorgang verstanden, bei dem fortlaufend eine (Regel-)Größe erfasst, mit einer anderen Größe (Führungsgröße) verglichen und im Sinne einer Ausgleichung an die Führungsgröße beeinflusst wird.

Wie bereits erwähnt, lässt sich das erfindungsgemäße Verfahren zur Verbesserung des Regelungs- und Fahrverhaltens eines Manipulators sowohl im Bereich der Bewegungsplanung BP, der Interpolation IP als auch der Regelung RE einsetzen.

Dies gelingt erfindungsgemäß durch eine verbesserte Modellierung der Reibung hinsichtlich deren Temperaturverhaltens. Die Fig. 2a-d zeigen schematisch die Ansätze verschiedener Reibmodelle. Dargestellt ist jeweils das abtriebsseitige Moment $\tau G$ (Getriebemoment) über der zeitlichen Änderung einer Position q, d.h. einer Achsgeschwindigkeit d/dt q. Das Getriebemoment $\tau G$ ist über die Getriebeübersetzung und die Reibung mit einem Motormoment $\tau M$ verknüpft, vgl. Gleichung 4. In der Fig. 2 ist das Modell einer Coulomb-Reibung dargestellt. Zu Fig. 2b ist dasselbe Modell mit zusätzlicher viskoser Reibung gezeigt, bei dem das Getriebemoment $\tau G$ mit wachsendem Betrag der Achsgeschwindigkeit zunimmt. Teilabbildung Fig. 2c zeigt ein Modell, bei dem aufgrund von Haftreibung ein erhöhtes Losbrechmoment bei d/dt q = 0 erforderlich ist. Teilabbildung 2d zeigt eine Abwandlung des Unterfalls gemäß Teilabbildung Fig. 2c (Abbildungen nach H. Olsson, KJ Åström, C. Canudas, de Wit, M. Gäfvert, P. Lischinsky: Friction Models and Friction Compensation, European Journal of Control, 29(4), 1998, pp. 176-195).

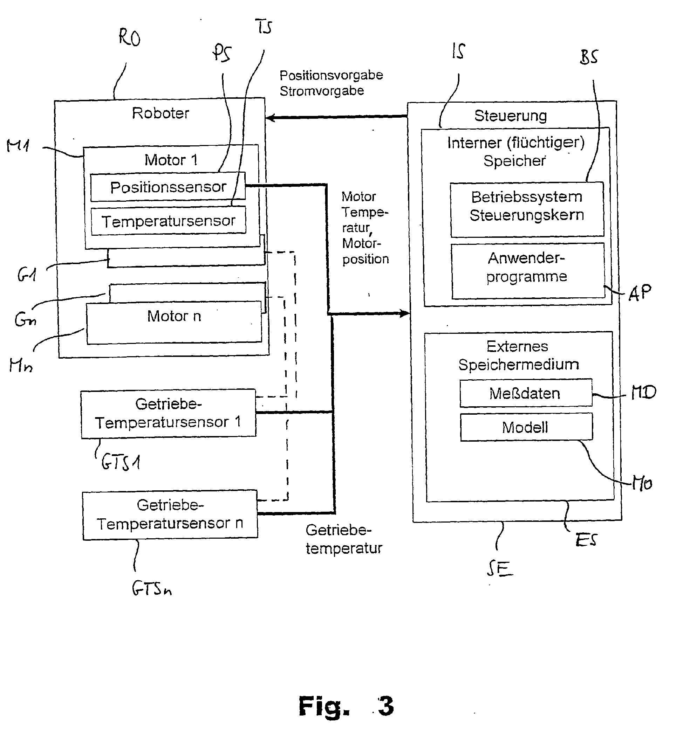

Um im Rahmen von Reibmodellen, wie sie der Fig. 2a-d zugrundeliegen, auch Temperatureinflüsse berücksichtigen zu können, schlägt die Erfindung zunächst das in der Fig. 3 schematisch dargestellte Verfahren bzw. eine entsprechend ausgebildete Vorrichtung vor. Gezeigt ist anhand eines Blockschaltbildes ein automatisch gesteuerter Manipulator oder Roboter RO, der für eine Bewegung seiner Achsen (nicht dargestellt) eine Reihe von Motoren M1, ..., Mn besitzt, denen entsprechend Getriebe G1, ..., Gn zugeordnet sind. Für die Motoren M1, ..., Mn weist der Roboter RO gemäß der Fig. 3 weiterhin jeweils Positions- und Temperatursensoren PS bzw. TS auf, die aus Gründen der Übersichtlichkeit in der Fig. 3 nur für den Motor M1 explizit dargestellt sind. Zu Vermessungszwecken weist der Roboter RO darüber hinaus noch Getriebe-Temperatursensoren GTS1, ..., GTSn auf, die nicht serienmäßig bei dem entsprechenden Roboter RO vorgesehen sein müssen. Um dies zu verdeutlichen, sind in Fig. 3 die Getriebe-Temperatursensoren GTS1, ..., GTSn außerhalb des Roboter RO dargestellt und stehen über die gestrichelt eingezeichneten Verbindungen mit dem jeweiligen Getriebe G1, ..., Gn in Wirkverbindung.

Die Positionssensoren PS der Motoren des Roboters können als Geber, Resolver oder dergleichen ausgebildet sein.

Die Getriebe-Temperatursensoren GTS1, ..., GTSn sind vorzugsweise derart ausgestaltet und angeordnet, dass über sie eine Getriebeöl-Temperatur der Getriebe G1, ..., Gn bestimmbar ist.

Zur Steuerung des Roboters RO ist gemäß der Fig. 3 weiterhin eine Steuerungseinheit SE vorgesehen. Diese kann beispielsweise als Steuerungsrechner in Form eines PC ausgebildet sein, und umfasst erfindungsgemäß zumindest einen flüchtigen internen Speicher IS für ein Betriebssystem und einen Steuerungskern BS sowie für benötigte Anwenderprogramme AP. Darüber hinaus weist die Steuerungseinheit SE ein externes Speichermedium ES, beispielsweise in Form eines Festplattenspeichers, auf, das gemäß der Fig. 3 zum Speichern von Messdaten MD und Modellen MO, insbesondere Reibmodellen für den Roboter RO, dient.

Nach dem erfindungsgemäßen Verfahren liefert der Roboter RO über seine Sensorik Informationen bezüglich der Motortemperaturen und der Motorpositionen an die Steuerungseinheit SE (dicker Pfeil in Fig. 3). Des Weiteren liefern die Getriebe-Temperatursensoren GTS1, ..., GTSn Informationen bezüglich der jeweils in den Getrieben G1, ..., Gn herrschenden Getriebetemperaturen an die Steuerungseinheit SE, die ihrerseits Positions- und Stromvorgaben an die Roboter RO bzw. dessen Antriebe liefert.

Vorteilhafterweise beinhalten die Anwenderprogramme AP Programme für Messfahrten, mittels derer die Steuerungseinheit SE den Roboter RO veranlasst, Bewegungen auszuführen, die den kompletten Bereich der Eingangsgrößen des verwendeten Reibmodells (vgl. Gleichung 7) abdecken. Die erfassten Ist-Werte für Position, Motortemperatur und Getriebetemperatur werden während dieser Messfahrten zyklisch erfasst und in einer Datei (Messdaten MD) im externen Speicher ES abgelegt. Aus diesen Messdaten MD kann nach Beendigung der Messfahrten entweder die Steuerungseinheit SE selbst oder ggf. ein anderer, externer Rechner (nicht gezeigt) ein temperaturabhängiges Getriebe-Reibmodell MO für den Roboter RO erstellen, das dauerhaft im externen Speicher ES verbleibt und somit anschließend auch während eines regelmäßigen Betriebs des Roboters RO ohne Getriebe-Temperatursensoren durch Vergleich mit den regelmäßig auch weiterhin bestimmbaren Motortemperaturen und Motorpositionen zum Ermitteln einer Getriebetemperatur bzw. eines Getriebe-Reibmoments verwendbar ist.

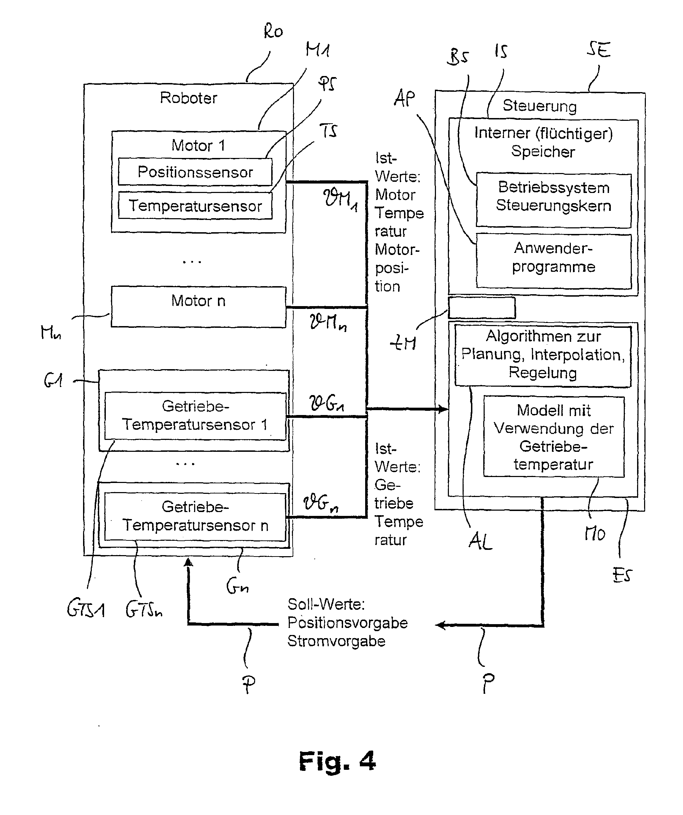

Im einfachsten Fall ist jedoch ein erfindungsgemäßer Roboter gemäß der Fig. 4 dauerhaft, d.h. auch während seines regelmäßigen Betriebs, mit Getriebe-Temperatursensoren GTS1, ...,GTSn ausgestattet, die die jeweilige Getriebetemperatur $\vartheta G$ direkt über Sensoren im Getriebeöl messen.

Die für den regelmäßigen Betrieb des Roboters RO erforderliche Steuerungseinheit SE enthält nunmehr in ihrem externen Speicher ES neben dem Modell MO mit Verwendung der Getriebetemperatur $\vartheta G$ entsprechende Algorithmen AL zur Planung, Interpolation und Regelung von Bewegungen bzw. Bewegungszuständen des Roboter RO (vgl. Fig. 1). Bei allen Planungs-, Interpolations- und Regelungsroutinen der Steuerungseinheit SE wird dann die aktuell gemessenen Getriebetemperatur $\vartheta G_{ist}$ verwendet und beeinflusst die Soll-Vorgaben von Position und Strom (Pfeil P in Fig. 4). So wird bei der (zeitoptimalen) Planung zu Beginn der Planung eines jeden Satzes die jeweilige Ist-Temperatur $\vartheta M_{ist}$ und $\vartheta G_{ist}$ fixiert, und auftretende Momente werden unter Verwendung dieser Temperaturen bestimmt. Vorzugsweise weist die Steuerungseinheit SE zusätzlich noch eine Zeitmesseinrichtung ZM auf, nach deren Maßgabe eine Neuplanung erfolgt, wenn zwischen Planung und Interpolation (vgl. Fig. 1) eines Satzes eine Unterbrechung auftritt, die hinreichend lange dauert, so dass eine Abkühlung der Motoren und Getriebe zu erwarten ist. Die entsprechende Zeitschwelle ist durch einen Anwender geeignet vorgebbar.

Zusätzlich zur Planung werden auch in der Interpolation und in der Regelung die entsprechenden (Vorsteuer-) Momente unter Verwendung der aktuellen Ist-Temperaturen berechnet.

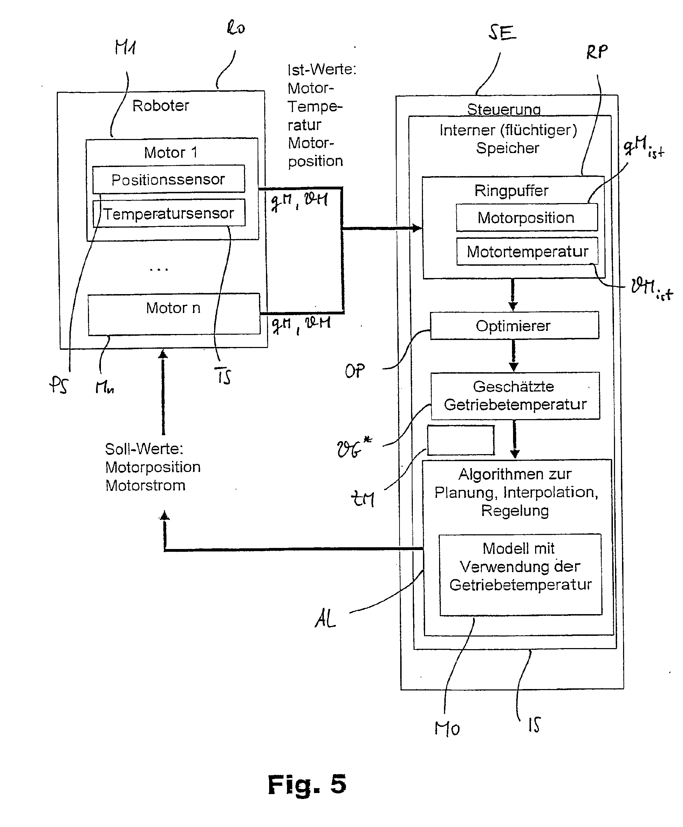

Insbesondere aus Kostengründen kann es jedoch erstrebenswert sein, unter Bewahrung des Grundgedankens der Erfindung wie bisher auf eine direkte Messung der Getriebetemperatur im regelmäßigen Betrieb des Roboters zu verzichten. Dieser Sachverhalt ist in der nachfolgenden Fig. 5 dargestellt. Der dort gezeigte, für den regelmäßigen Betrieb vorgesehene Roboter RO umfasst ausschließlich Temperatursensoren TS in den Motoren M1, ..., Mn, jedoch keine Getriebe-Temperatursensoren.

Nach einer bevorzugten Ausgestaltung der Erfindung umfasst die Steuerungseinheit SE nunmehr in ihrem flüchtigen internen Speicher IS zusätzlich zu den in der Fig. 5 aus Gründen der Übersichtlichkeit nicht erneut dargestellten Betriebssystem- und Programmkomponenten BS bzw. AP (vgl. Fig. 4) einen Ringpuffer RP als Speichereinrichtung für die vom Roboter gelieferten Ist-Werte/Messdaten betreffend eine Motorposition und Motortemperatur qM bzw. $\vartheta M$. Weiterhin beinhaltet die Steuerungseinheit SE einen Optimierer OP, der vorzugsweise softwaretechnisch ausgebildet ist und seinem Wesen nach zum rechnerischen Lösen des weiter oben formulierten numerischen Optimierungsproblems vorgesehen ist. Entsprechend der Ausgestaltung gemäß der Fig. 4 enthält die Steuerungseinheit SE wiederum Planungs-, Interpolations-und Regelungsalgorithmen AL sowie ein Modell MO des Roboters RO unter Verwendung der Getriebetemperatur.

Der Optimierer OP liefert gemäß dem erfindungsgemäßen Verfahren durch numerische Lösung eines zeitlich ausgedehnten oder eines zeitlich lokalen Optimierungsproblems (Gleichung 12 bzw. 13) eine geschätzte Getriebetemperatur $\vartheta G^*$, die anschließend dem Modell MO zur Verfügung gestellt wird und anhand derer mittels der Algorithmen AL entsprechende, temperaturabhängige Soll-Werte für die Motor-Positionen qM und die Motorströme I an den Roboter RO geliefert werden.

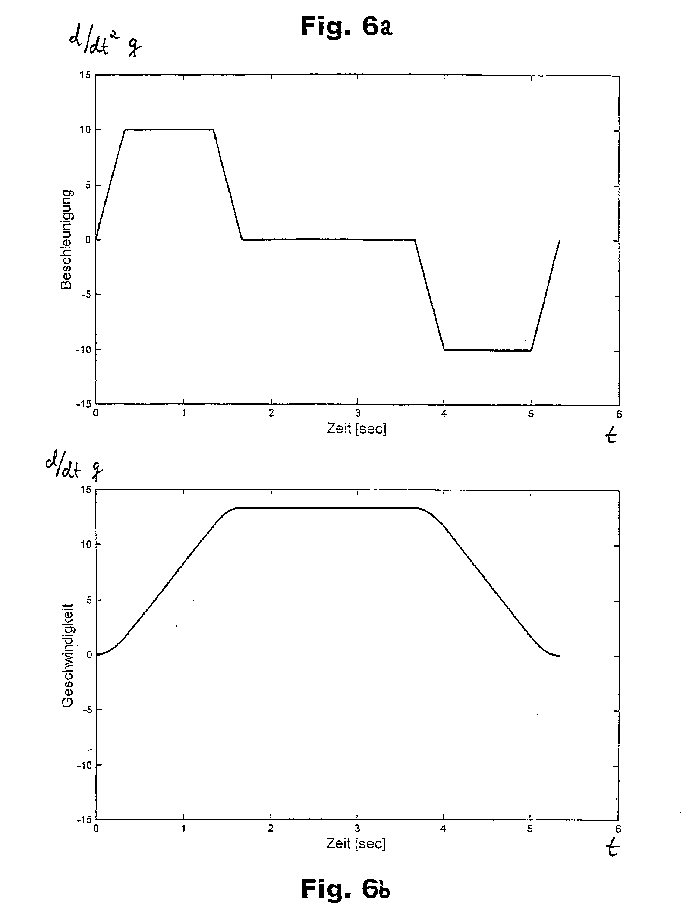

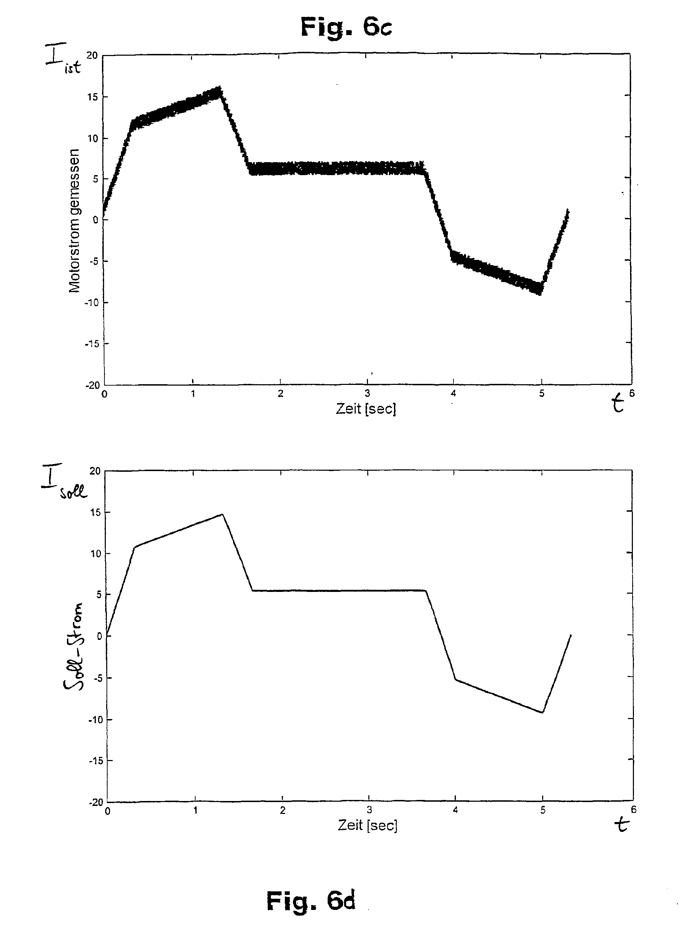

Die Grundzüge in der erfindungsgemäß zum Einsatz kommenden Algorithmen wurden vorstehend bereits detailliert erläutert. Darüber hinaus kann die Bestimmung der Getriebetemperatur $\vartheta G$ (bzw. der geschätzten Getriebetemperatur $\vartheta G^*$) anhand der Fig. 6a-e folgendermaßen veranschaulicht werden: In der Fig. 6a ist zunächst eine (Achs-) Beschleunigung $d/dt^2\ q$ als einheitslose Größe über der Zeit t dargestellt. Den aus diesem hypothetischen Beschleunigungsverlauf resultierenden Geschwindigkeitsverlauf zeigt die Fig. 6b in einer Darstellung von $d/dt\ q$ über t. Der entsprechende Ist-Strom I(t) kann gemessen werden und ist in der Fig. 6c als verrauschtes Signal dargestellt. Erfindungsgemäß wird der Signalverlauf gemäß der Fig. 6c vorzugsweise über einen Zeitraum [t_act-T,t_act] aufgezeichnet und in dem Ringpuffer RP gemäß der Fig. 5 abgelegt.

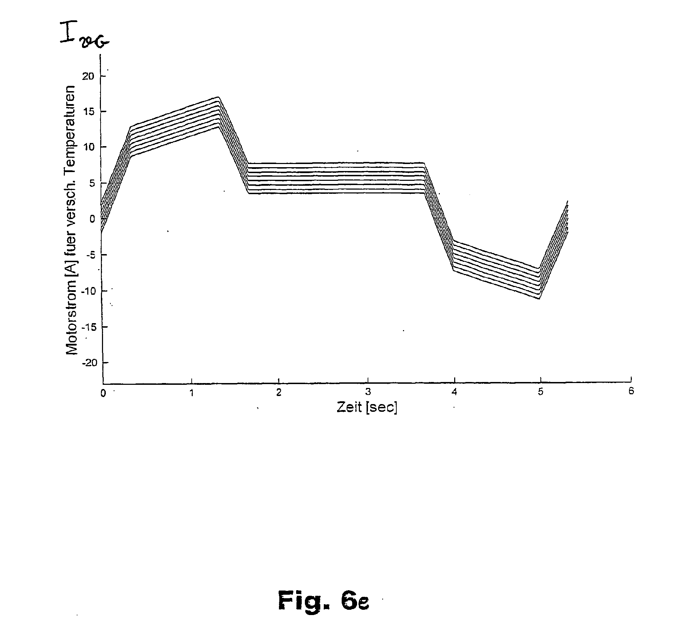

Für jeden hypothetischen Wert $\vartheta G$ kann aus den über den Zeitraum [t_act-Tt_act] gemessenen (und gespeicherten) Ist-Größen qG, $d/dt\ qG$, $d/dt^2\ qG$, qM, $d/dt\ qM$, $d/dt^2\ qM$, $\vartheta M$ zusammen mit $\vartheta G$ ein Stromverlauf I berechnet werden (vgl. Gleichung 9). Das Ergebnis einer solchen Berechnung ist eine in $\vartheta G$ parametrisierte Schar von Kurven für den Stromverlauf $I_{\vartheta G}$. Eine solche Schar ist in der Fig. 6e dargestellt, während die Fig. 6d den Soll-Strom $I_{soll}$ für die tatsächliche (korrekte) Reibtemperatur(Getriebetemperatur zeigt.

Zur optimalen Variation der angenommenen/geschätzten Getriebetemperatur $\vartheta G^*$ wird dieser Strom $I_{\vartheta G}$ (vgl.

Fig. 6e) erfindungsgemäß mit dem Ist-Strom $I_{ist}$ optimal zur Deckung gebracht, woraufhin der bestimmte optimale Wert für die Getriebetemperatur als "echte" Getriebetemperatur für das Reibmodell gesetzt wird. Im Rahmen der Erfindung wird der Begriff "optimal" typischerweise im Sinne des kleinsten quadratischen Abstands zwischen dem berechneten Motorstrom $I_{\vartheta G}$ und dem gemessenen Motorstrom $I_{ist}$ definiert, so dass das erfindungsgemäße Berechnungsverfahren gemäß Gleichung 12 bzw. 13 auf einer Robotersteuerung analog der dargestellten Steuerungseinheit SE (vgl. Fig. 3 bis 5) durch ein in der Regel nichtlineares Least-Squares-Verfahren gelöst wird. Dies ist grundsätzlich beispielsweise bei Charles Lawson and Richard Hanson: Solving Least Squares Problems, Prentice-Hall, 1974, revised edition, SIAM, 1995 sowie bei P. Deuflhard: Newton Methods for Nonlinear Problems. Affine Invariance and Adaptive Algorithms, Series Computational Mathematics 35, Springer (2004) beschrieben.

Der Darstellung in der Fig. 6e liegt ein (künstliches) Reibmodell der Form

$$\tau RG = \tau RG\left(qG, d/dt\, qG, d/dt^2\, qG, \vartheta G\right)$$
$$= C_1 \cdot d/dt\, qG + C_2 \cdot \vartheta G \tag{14}$$

zugrunde ($C_1$, $C_2$: = const.). Da in diesem Modell die Temperatur $\vartheta G$ additiv eingeht, wird die Momentenlinie - wie in der Fig. 6e gezeigt - bei einer Variation von $\vartheta G$ nur aufund abgeschoben.

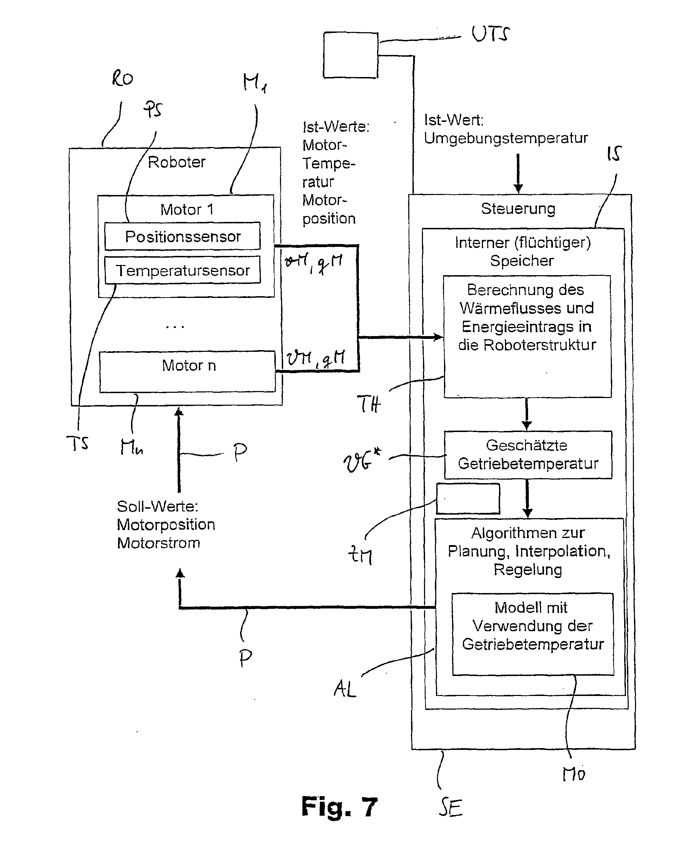

Abschließend zeigt die Fig. 7 eine weitere Ausgestaltung des erfindungsgemäßen Verfahrens bzw. der erfindungsgemäßen Vorrichtung, wobei entsprechend der Darstellung in Fig. 5 keine Getriebe-Temperatursensoren am Roboter RO zum Einsatz kommen.

Hierbei weist die erfindungsgemäße Vorrichtung in Wirkverbindung mit der Steuerungseinheit SE einen Umgebungstemperatur-Sensor UTS auf, durch den ein Ist-Wert für die Umgebungstemperatur des Roboters RO an die Steuerungseinheit SE lieferbar ist. Entsprechend weist die Steuerungseinheit SE in ihrem flüchtigen internen Speicher IS Mittel TH zur Berechnung des Wärmeflusses und des Energieeintrags in die Roboterstruktur (alle Strukturteile einschließlich Getriebe) auf, wobei der gemessene Ist-Wert für die Umgebungstemperatur in die Berechnung mit einfließt. Die genannten Berechnungsmittel TH sind vorzugsweise softwaretechnisch ausgebildet und liefern in Abhängigkeit von den gefahrenen Geschwindigkeiten und entsprechenden Parametern bei Verwendung von Modellen für die Wärmeleitung in der mechanischen Struktur des Roboters RO sowie für die Wärmeabstrahlung an die Umgebung einen Schätzwert $\vartheta G^*$ für die Getriebetemperatur.

Die dicken Pfeile in der Fig. 7 zeigen, wie während des regelmäßigen Betriebs des Roboters RO zunächst Daten betreffend Motorpositionen qM sowie Motor-Temperaturdaten $\vartheta M$ zyklisch von den Antrieben des Roboters RO an die Steuerungseinheit SE geschickt werden. Zusätzlich wird - wie bereits erwähnt - die Umgebungstemperatur über den Sensor UTS von der Steuerungseinheit SE eingelesen. In einem bestimmten Takt wird anschließend eine Modellrechnung aufgerufen (Berechnungsmittel TH), die anhand der gemessenen Daten des Roboters und der Umgebungstemperatur über ein Wärmeflussmodell die aktuelle Getriebetemperatur $\vartheta G$ schätzt. Die geschätzte Getriebetemperatur $\vartheta G^*$ wird anschließend analog zu dem vorstehend beschriebenen erfindungsgemäßen Verfahren allen Planungs-, Interpolations- und Regelungsverfahren zur Verfügung gestellt. Abhängig von der geschätzten Getriebetemperatur $\vartheta G^*$ werden Strom- und Positionsvorgaben an die Antriebe des Roboter RO geschickt (Pfeil P in Fig. 7).

Demnach kann bei dieser Verfahrensvariante aus den Soll-Größen eine Soll-Temperatur über den Energieeintrag im System geschätzt werden.

**Bezugszeichenliste**

| | |
|---|---|
| AL | Algorithmen |
| AP | Anwenderprogramme |
| AS | Antriebsschnittstelle |
| BP | Bewegungsplanung |
| BS | Betriebssystem/Steuerungskern |
| ES | externer Speicher |
| G1, ..., Gn | Getriebe |
| GTS1, ..., GTSn | Getriebe-Temperatursensor |
| IC | Interpreter/Compiler |
| IP | Interpolation |
| IS | interner Speicher |

| MD | Messdaten |
|---|---|
| MO | Modell |
| M1, ..., Mn | Motor |
| OP | Optimierer |
| PS | Positionssensor |
| RE | Regelung |
| RO | Roboter |
| RP | Ringpuffer |
| SE | Steuerungseinheit |
| TH | Wärmefluss-Berechnungsmittel |
| TS | Temperatursensor |
| UTS | Umgebungstemperatur-Sensor |
| ZM | Zeitmesseinrichtung |
| $\vartheta G^*$ | geschätzte Getriebetemperatur |
| $k_T$ | zeitunabhängiger Proportionalitätsfaktor zwischen Motorstrom und Motormoment |

**Patentansprüche**

1. Verfahren zum Regeln oder Steuern eines automatisch gesteuerten Manipulators, wie insbesondere eines Roboters (RO), bei Verwendung eines dynamischen Manipulatormodells unter Berücksichtigung von Reibmomenten, die in zum Bewegen von Achsen des Manipulators vorgesehenen Getrieben (G1, ..., Gn) auftreten, wobei für wenigstens eine Achse ein Modell für das Getriebe-Reibmoment auf der Grundlage abtriebseitiger Achsgeschwindigkeiten und Achsbeschleunigungen bestimmt und zum Bestimmen von Sollwerten, wie einer Motorposition oder eines Motorstroms, verwendet wird, **dadurch gekennzeichnet, dass** das Getriebe-Reibmoment in Abhängigkeit von einer Getriebetemperatur bestimmt wird.

2. Verfahren nach Anspruch 1, **dadurch gekennzeichnet, dass** Getriebetemperaturen direkt gemessen werden.

3. Verfahren nach Anspruch 2, **dadurch gekennzeichnet, dass** die Messung der Getriebetemperatur während eines regelmäßigen Betriebs des Manipulators erfolgt.

4. Verfahren nach Anspruch 2 oder 3, **dadurch gekennzeichnet, dass** die Messung der Getriebetemperatur vor Aufnahme eines regelmäßigen Betriebs des Manipulators erfolgt.

5. Verfahren nach Anspruch 1, **dadurch gekennzeichnet, dass**

   a) in bestimmten zeitlichen Abständen antriebseitige Ist-Größen des Manipulators, wie Motorstrom, Motorposition oder Motortemperatur, gemessen werden;
   b) anhand eines Wärmeleitungsmodells in einem regelmäßigen Takt der Wärmeeintrag und eine Wärmeleitung in der mechanischen Struktur des Manipulators einschließlich Getriebe ermittelt wird; und
   c) aus der Wärmeleitung eine Getriebetemperatur angenähert bestimmt wird.

6. Verfahren nach Anspruch 5, **dadurch gekennzeichnet, dass** zusätzlich in bestimmten zeitlichen Abständen eine Umgebungstemperatur bestimmt wird, dass anhand der Umgebungstemperatur in einem regelmäßigen Takt eine Wärmeabstrahlung vom Manipulator an die Umgebung ermittelt wird und dass die Getriebetemperatur aus der Wärmeleitung und der Wärmeabstrahlung bestimmt wird.

7. Verfahren nach einem der Ansprüche 2 bis 6, **dadurch gekennzeichnet, dass** mittels einer Messung von Werten antriebseitiger Ist-Größen des Manipulators, wie Motorstrom oder Motorposition, ein Kennfeld des Getriebe-Reibmodells nach Maßgabe der Getriebetemperaturen bestimmt wird, anhand dessen anschließend ein Wert der Getriebetemperatur bzw. ein Getriebe-Reibmoment in Abhängigkeit von den antriebseitigen Ist-Größen ermittelt wird.

8. Verfahren nach Anspruch 7, **dadurch gekennzeichnet, dass** das Kennfeld und das Getriebe-Reibmodell vor Aufnahme eines regelmäßigen Betriebs des Manipulators bestimmt und zur späteren Verwendung gespeichert werden.

9. Verfahren nach einem der Ansprüche 1 bis 8, **dadurch gekennzeichnet, dass** in regelmäßigen zeitlichen Abständen quasi-kontinuierlich antriebseitige Ist-Größen des Manipulators, wie ein Motorstrom oder eine Motorposition, bestimmt und deren Werte während einer vorgegebenen Zeitdauer gespeichert werden, wobei die Speicherungs-Zeitdauer größenordnungsmäßig klein gegen eine Zeitskala für Änderungen der Getriebetemperatur ist, und dass im Takt eines vorgegebenen Zeitintervalls eine angenäherte Bestimmung der Getriebetemperatur erfolgt, wobei zur Bestimmung die im Zeitpunkt der Bestimmung gespeicherten Werte der Ist-Größen verwendet werden.

**10.** Verfahren nach Anspruch 9, **dadurch gekennzeichnet, dass** die Speicherungs-Zeitdauer und das Bestimmungs-Zeitintervall in derselben Größenordnung gewählt werden.

**11.** Verfahren nach einem der Ansprüche 4 bis 10, **dadurch gekennzeichnet, dass** das Bestimmen der Getriebetemperatur durch Minimierung des Werts eines Ausdrucks
bezüglich $\vartheta G$ erfolgt, wobei

t die Zeitkoordinate;
t_act einen aktuellen Zeitpunkt;
T die Speicherungs-Zeitdauer;
$I_{soll}$ einen Soll-Motorstrom;
$\vartheta G$ die zu bestimmende Getriebetemperatur;
qG(t) eine zeitabhängige abtriebseitige Position;
$\vartheta M(t)$ die zeitabhängige Motortemperatur;
$\tau G(t)$ ein zeitabhängiges abtriebseitiges Moment;
$I_{ist}(t)$ einen zeitabhängigen Ist-Motorstrom;
w(t) eine zeitabhängige Gewichtungsfunktion;
$\tau M_{soll}$ ein antriebseitiges Soll-Moment;
$k_T$ einen Proportionalitätsfaktor gemäß $\tau M = k_T \cdot I$;
d/dt qG(t) die erste Ableitung der abtriebseitigen Position nach der Zeit, d.h. eine abtriebseitige Geschwindigkeit; und
$d/dt^2$ qG(t) die zweite Ableitung der abtriebseitigen Position nach der Zeit, d.h. eine abtriebseitige Beschleunigung

bezeichnet.

**12.** Verfahren nach einem der Ansprüche 4 bis 8, **dadurch gekennzeichnet, dass** das Bestimmen der Getriebetemperatur durch Minimierung des Werts eines Ausdrucks

$$\left| \tau M_{soll}\left(\vartheta G; d/dt\, qG(t), d/dt^2\, qG(t), \vartheta M(t), \tau G(t)\right) - \tau M_{ist}(t) \right|^2$$

erfolgt, wobei wiederum

t die Zeitkoordinate;
$\vartheta G$ die zu bestimmende Getriebetemperatur;
qG(t) eine zeitabhängige abtriebseitige Position;
$\vartheta M(t)$ die zeitabhängige Motortemperatur;
$\tau G(t)$ ein zeitabhängiges abtriebseitiges Moment;
$I_{ist}(t)$ einen zeitabhängigen Ist-Motorstrom;
$\tau M_{soll}$ ein antriebseitiges Soll-Moment;
$\tau M_{ist}$ ein antriebseitiges Ist-Moment;
d/dt qG(t) die erste Ableitung der abtriebseitigen Position nach der Zeit, d.h. eine abtriebseitige Geschwindigkeit; und
$d/dt^2$ qG(t) die zweite Ableitung der abtriebseitigen Position nach der Zeit, d.h. eine abtriebseitige Beschleunigung

bezeichnet.

**13.** Verfahren nach Anspruch 11 oder 12, **dadurch gekennzeichnet, dass** als Startwert für eine numerische Minimierung des Ausdrucks ein zuletzt ermittelter Wert der Getriebetemperatur verwendet wird.

**14.** Verfahren nach einem der vorangehenden Ansprüche, **dadurch gekennzeichnet, dass** bei einer Vorausplanung einer Folge wechselnder Manipulatorstellungen, insbesondere hinsichtlich Geometrie, Zeitverlauf und Geschwindigkeiten einer Bewegung, auftretende Werte von Soll-Größen, wie eines Motorstroms oder einer Motorposition, unter Verwendung der Getriebetemperatur bestimmt werden.

**15.** Verfahren nach Anspruch 14, **dadurch gekennzeichnet, dass** vor Beginn einer Interpolation einer entsprechenden Stellungsfolge eine Neuplanung erfolgt, wenn zwischen der Vorausplanung und der Interpolation eine Zeit vergangen ist, die eine vorgegebene Zeitschwelle übersteigt.

**16.** Verfahren nach einem der vorangehenden Ansprüche, **dadurch gekennzeichnet, dass** bei einer Interpolation von Manipulatorstellungen und/oder bei einer Regelung auftretende Werte von Soll-Größen, wie eines Motorstroms oder einer Motorposition, unter Verwendung der Getriebetemperatur bestimmt werden.

**17.** Vorrichtung zum Regeln oder Steuern eines automatisch gesteuerten Manipulators, wie insbesondere eines Roboters (RO), der eine Anzahl von Achsen und zu deren Bewegung eine Anzahl von Motoren (M1, ..., Mn) und Getrieben (G1, ..., Gn) aufweist, mit einer Steuerungseinheit (SE), die zum Verwenden eines dynamischen Manipulatormodells unter Berücksichtigung von in den Getrieben auftretenden Reibmomenten ausgebildet ist, wobei für wenigstens eine Achse ein Modell für ein betreffendes Getriebe-Reibmoment auf der Grundlage abtriebseitiger Achsgeschwindigkeiten und Achsbeschleunigungen vorgesehen und durch die Steuerungseinheit zum Bestimmen von Sollwerten, wie einer Motorposition oder eines Motorstroms, verwendbar ist,
**gekennzeichnet durch** wenigstens eine in Wirkverbindung mit der Steuerungseinheit (SE) befindliche Bestimmungseinrichtung (AL, MO) für eine Getriebetemperatur ($\vartheta$G, $\vartheta$G*), deren Ausgangssignal in der Steuerungseinheit (SE) zum Bestimmen des Getriebe-Reibmoments ($\tau$RG) auswertbar ist.

**18.** Vorrichtung nach Anspruch 17, **dadurch gekennzeichnet, dass** die Temperatur-Bestimmungseinrichtung als in das Getriebe (G1, ..., Gn) integrierbarer Temperatursensor (GTS1, ... GTSn) ausgebildet ist.

**19.** Vorrichtung nach Anspruch 17 oder 18, **dadurch gekennzeichnet, dass** die Temperatur-Bestimmungseinrichtung zum Messen einer Temperatur des Getriebeöls ausgebildet ist.

**20.** Vorrichtung nach Anspruch 17, **dadurch gekennzeichnet, dass** in der Steuerungseinheit (SE) ein Wärmeleitungsmodell verfügbar ist, wobei die Steuerungseinheit (SE) zum Ermitteln des Wärmeeintrags in die mechanische Struktur des Manipulators (RO) in einem regelmäßigen Takt ausgebildet ist, so dass aus dem Wärmeeintrag eine Getriebetemperatur ($\vartheta$G) angenähert bestimmbar ist.

**21.** Vorrichtung nach einem der Ansprüche 17 bis 20, **dadurch gekennzeichnet, dass** die Steuereinheit (SE) zur Ermittlung des Wärmeeintrags aus Ist-Geschwindigkeit am Getriebe und Ist-Temperatur am Motor (M1, ..., Mn) ausgebildet ist.

**22.** Vorrichtung nach Anspruch 20 oder 21, **dadurch gekennzeichnet, dass**

a) eine Einrichtung (UTS) zum Bestimmen einer Umgebungstemperatur des Manipulators (RO) in bestimmten zeitlichen Abständen vorgesehen ist; dass
b) die Steuerungseinrichtung (SE) zum Ermitteln einer Wärmeabstrahlung vom Manipulator (RO) an die Umgebung anhand der Umgebungstemperatur in einem regelmäßigen Takt ausgebildet ist; und dass
c) aus Wärmeeintrag und Wärmeabstrahlung eine Getriebetemperatur ($\vartheta$G) angenähert bestimmbar ist.

**23.** Vorrichtung nach einem der Ansprüche 17 bis 22, **gekennzeichnet durch** eine Bestimmungseinrichtung für ein Kennfeld des Getriebe-Reibmodells ($\tau$RG) nach Maßgabe der Getriebetemperaturen ($\vartheta$G) aus Werten antriebsseitiger Ist-Größen des Manipulators (RO), wie eines Motorstroms ($I_{ist}$) oder einer Motorposition ($qM_{ist}$), anhand dessen ein Wert der Getriebetemperatur ($\vartheta$G, $\vartheta$G*) bzw. ein Getriebe-Reibmoment ($\tau$RG) in Abhängigkeit von den antriebsseitigen Ist-Größen **durch** die Steuerungseinheit (SE) ermittelbar ist.

**24.** Vorrichtung nach Anspruch 23, **gekennzeichnet durch** eine erste Speichereinrichtung (ES) für das Kennfeld und das Getriebe-Reibmodell ($\tau$RG) zur späteren Verwendung **durch** die Steuerungseinheit (SE) während eines regelmäßigen Betriebs des Manipulators (RO).

**25.** Vorrichtung nach einem der Ansprüche 17 bis 24, **gekennzeichnet durch** eine zweite Speichereinrichtung (RP), die zum quasi-kontinuierlichen Speichern von Werten antriebseitiger Ist-Größen des Manipulators (RO), wie eines Motorstroms ($I_{ist}$) oder einer Motorposition ($qM_{ist}$), in regelmäßigen zeitlichen Abständen und zum Halten der Werte während einer vorgegebenen Zeitdauer (T) ausgebildet ist, wobei die Zeitdauer (T) größenordnungsmäßig klein gegen eine Zeitskala für Änderungen der Getriebetemperatur ($\vartheta G$) ist.

**26.** Vorrichtung nach Anspruch 25, **dadurch gekennzeichnet, dass** die Speicherungs-Zeitdauer (T) etwa 0,1 s bis 1 s, vorzugsweise etwa 0,5 s beträgt.

**27.** Vorrichtung nach Anspruch 25 oder 26, **dadurch gekennzeichnet, dass** die zweite Speichereinrichtung (RP) als Ringpuffer ausgebildet ist.

**28.** Vorrichtung nach einem der Ansprüche 25 bis 27, **dadurch gekennzeichnet, dass** die Steuerungseinheit (SE) zum angenäherten Bestimmen der Getriebetemperatur ($\vartheta G$) im Takt eines vorgegebenen Zeitintervalls ($\Delta T$) ausgebildet ist, wobei zur Bestimmung die im Zeitpunkt (t_act) der Bestimmung.in der zweiten Speichereinrichtung (RP) gespeicherten Werte auswertbar sind.

**29.** Vorrichtung nach Anspruch 28, **dadurch gekennzeichnet, dass** die Speicherungs-Zeitdauer (T) und das Bestimmungs-Zeitintervall ($\Delta T$) von derselben Größenordnung sind.

**30.** Vorrichtung nach einem der Ansprüche 17 bis 29, **dadurch gekennzeichnet, dass** die Steuerungseinheit (SE) zum Bestimmen der Getriebetemperatur ($\vartheta G$) durch Minimierung des Werts eines Ausdrucks

$$\int_{-act-T}^{-act} \left| I_{soll}\left(\vartheta G; d/dt\, qG(t), d/dt^2\, qG(t), \vartheta M(t), \tau G(t)\right) - I_{ist}(t) \right|^2 w(t)\, dt$$

$$= \int_{-act-T}^{-act} \left| \tau M_{soll}\left(\vartheta G; d/dt\, qG(t), d/dt^2\, qG(t), \vartheta M(t), \tau G(t)\right)/k_T - I_{ist}(t) \right|^2 w(t)\, dt$$

$$= \int_{-act-T}^{-act} \left| \begin{array}{c} \left((\tau G + \tau RG)/R - \tau RM\right)_{soll} \times \\ \times \left(\vartheta G; d/dt\, qG(t), d/dt^2\, qG(t), \vartheta M(t), \tau G(t)\right)/k_T - I_{ist}(t) \end{array} \right|^2 w(t)\, dt$$

ausgebildet ist, wobei nach $\vartheta G$

$\quad$ t die Zeitkoordinate;
$\quad$ t_act einen aktuellen Zeitpunkt;
$\quad$ T die Speicherungs-Zeitdauer;
$\quad$ $I_{soll}$ einen Soll-Motorstrom;
$\quad$ $\vartheta G$ die zu bestimmende Getriebetemperatur;
$\quad$ qG(t) eine zeitabhängige abtriebseitige Position;
$\quad$ $\vartheta M(t)$ die zeitabhängige Motortemperatur;
$\quad$ $\tau G(t)$ ein zeitabhängiges abtriebseitiges Moment;
$\quad$ $I_{ist}(t)$ einen zeitabhängigen Ist-Motorstrom;
$\quad$ w(t) eine zeitabhängige Gewichtungsfunktion;
$\quad$ $\tau M_{soll}$ ein antriebseitiges Soll-Moment;
$\quad$ $k_T$ einen Proportionalitätsfaktor gemäß $\tau M = k_T \cdot I$;
$\quad$ d/dt qG(t) die erste Ableitung der abtriebseitigen Position nach der Zeit, d.h. eine abtriebseitige Geschwindigkeit; und
$\quad$ $d/dt^2$ qG(t) die zweite Ableitung der abtriebseitigen Position nach der Zeit, d.h. eine abtriebseitige Beschleunigung

bezeichnet.

**31.** Vorrichtung nach einem der Ansprüche 17 bis 24, **dadurch gekennzeichnet, dass** die Steuerungseinheit (SE) zum Bestimmen der Getriebetemperatur ($\vartheta$G) durch Minimierung des Werts eines Ausdrucks

$$\left|\tau M_{soll}\left(\vartheta G; d/dt\, qG(t), d/dt^2\, qG(t), \vartheta M(t), \tau G(t)\right) - \tau M_{ist}(t)\right|^2$$

ausgebildet ist, wobei

t die Zeitkoordinate;
$\vartheta$G(t) die zeitabhängige Getriebetemperatur;
qG eine zu bestimmende abtriebseitige Position;
$\vartheta$M(t) die zeitabhängige Motortemperatur;
$\tau$G(t) ein zeitabhängiges abtriebseitiges Moment;
$I_{ist}$(t) einen zeitabhängigen Ist-Motorstrom;
$\tau M_{soll}$ ein antriebseitiges Soll-Moment;
$\tau M_{ist}$ ein antriebseitiges Ist-Moment;
d/dt qG(t) die erste Ableitung der abtriebseitigen Position nach der Zeit, d.h. eine abtriebseitige Geschwindigkeit; und
$d/dt^2$ qG(t) die zweite Ableitung der abtriebseitigen Position nach der Zeit, d.h. eine abtriebseitige Beschleunigung

bezeichnet.

**32.** Vorrichtung nach einem der Ansprüche 17 bis 31, **gekennzeichnet durch** eine Zeitmesseinrichtung (ZM), die bei einer Vorausplanung einer Folge wechselnder Manipulatorstellungen, insbesondere hinsichtlich Geometrie, Zeitverlauf und Geschwindigkeiten einer Bewegung, **durch** die Steuerungseinheit (SE) zum Bewirken einer Neuplanung ausgebildet ist, wenn eine zwischen der Vorausplanung und einer Interpolation der Stellungsfolge vergangene Zeit (t) eine vorgegebene Zeitschwelle übersteigt.

**33.** Verwendung einer Vorrichtung nach einem der Ansprüche 17 bis 32 zur Vorausplanung einer Folge wechselnder Manipulatorstellungen, insbesondere hinsichtlich Geometrie, Zeitverlauf und Geschwindigkeiten einer Bewegung, und zum Bestimmen für eine Realisierung der Stellungen erforderlicher Werte von Soll-Größen, wie eines Motorstroms oder einer Motorposition, unter Verwendung der Getriebetemperatur.

**34.** Verwendung einer Vorrichtung nach einem der Ansprüche 17 bis 32 zur Interpolation von Manipulatorstellungen und/oder bei einer Regelung auftretender Werte von Soll-Größen, wie eines Motorstroms oder einer Motorposition, unter Verwendung der Getriebetemperatur.

**35.** Verwendung einer Vorrichtung nach einem der Ansprüche 17 bis 32 zum Überwachen von Manipulatoren, insbesondere hinsichtlich Kollisionen durch Vergleichen von Soll-und Ist-Größen, wie eines Motorstroms oder einer Motorposition, unter Verwendung der Getriebetemperatur.

**Claims**

**1.** A method for closed- or open-loop control of an automatically controlled manipulator, such as in particular of a robot (RO), using a dynamic manipulator model taking account of friction torques, which arise in gears (G1 - Gn) provided for moving manipulator axes, wherein a model for the gear friction torque is being determined for at least one axis on the basis of output-side axis speeds and axis accelerations and being used to determine setpoints, such as a motor position or a motor current, **characterised in that** the gear friction torque is determined as a function of a gear temperature.

**2.** A method according to claim 1, **characterised in that** gear temperatures are measured directly.

**3.** A method according to claim 2, **characterised in that** measurement of the gear temperature takes place during regular operation of the manipulator.

4. A method according to claim 2 or claim 3, **characterised in that** measurement of the gear temperature takes place before starting regular operation of the manipulator.

5. A method according to claim 1, **characterised in that**

   a) input-side actual variables of the manipulator, such as motor current, motor position or motor temperature are measured at set time intervals;
   b) the heat input and heat conduction in the mechanical structure of the manipulator, including the gears, is determined on the basis of a heat conduction model in a regular cycle; and
   c) a gear temperature is determined approximately from the heat conduction.

6. A method according to claim 5, **characterised in that** an ambient temperature is additionally determined at set time intervals, **in that**, on the basis of the ambient temperature, thermal radiation from the manipulator to the surrounding environment is determined in a regular cycle and **in that** the gear temperature is determined from the heat conduction and thermal radiation.

7. A method according to any one of claims 2 to 6, **characterised in that**, by measuring the values of input-side actual variables of the manipulator, such as motor current or motor position, a performance map of the gear friction model is determined in accordance with the gear temperatures, by means of which a gear temperature value or a gear friction torque is then determined as a function of the input-side actual variables.

8. A method according to claim 7, **characterised in that** the performance map and the gear friction model are determined prior to starting regular operation of the manipulator and are stored for subsequent use.

9. A method according to any one of claims 1 to 8, **characterised in that** input-side actual variables of the manipulator, such as a motor current or a motor position, are determined quasi-continuously at regular time intervals and the values thereof are stored for a predetermined period, the storage period being of a small order of magnitude relative to a time scale for changes in gear temperature, and **in that** approximate determination of the gear temperature takes place in time with a predetermined time interval, the values of the actual variables stored at the time of determination being used for determination.

10. A method according to claim 9, **characterised in that** the storage period and the determination time interval are selected to be of the same order of magnitude.

11. A method according to any one of claims 4 to 10, **characterised in that** determination of the gear temperature proceeds by minimizing the value of an expression

$$\int_{t\_act-T}^{\_act} \left| I_{soll}\left(\vartheta G; d/dt\, qG(t), d/dt^2\, qG(t), \vartheta M(t), \tau G(t)\right) - I_{ist}(t) \right|^2 w(t)\, dt$$

$$= \int_{t\_act-T}^{\_act} \left| \tau M_{soll}\left(\vartheta G; d/dt\, qG(t), d/dt^2\, qG(t); \vartheta M(t), \tau G(t)\right)/k_T - I_{ist}(t) \right|^2 w(t)\, dt$$

$$= \int_{t\_act-T}^{\_act} \left| \begin{array}{c} ((\tau G + \tau RG)/R - \tau RM)_{soll} \times \\ \times \left(\vartheta G; d/dt\, qG(t), d/dt^2\, qG(t), \vartheta M(t), \tau G(t)\right)/k_T - I_{ist}(t) \end{array} \right|^2 w(t)\, dt$$

relative to $\vartheta G$, wherein

   t denotes the time coordinate;
   t_act denotes a current point in time;
   T denotes the storage period;
   $I_{soll}$ denotes a setpoint motor current;
   $\vartheta G$ denotes the gear temperature to be determined;
   qG(t) denotes a time-dependent output-side position;
   $\vartheta M(t)$ denotes the time-dependent motor temperature;

$_T$G(t) denotes a time-dependent output-side torque;

$I_{ist}$(t) denotes a time-dependent actual motor current;

w(t) denotes a time-dependent weighting function;

$_T$M$_{soll}$ denotes an input-side setpoint torque;

$k_T$ denotes a proportionality factor in accordance with $_T$M = $k_T \cdot$I;

d/dt qG(t) denotes the first derivative of the output-side position according to time, i.e. an output-side speed; and

d/dt$^2$ qG(t) denotes the second derivative of the output-side position according to time, i.e. an output-side acceleration.

**12.** A method according to any one of claims 4 to 8, **characterised in that** determination of the gear temperature proceeds by minimizing the value of an expression

$$\left| {_\tau}M_{soll}\left(\vartheta G; d/dt\, qG(t), d/dt^2\, qG(t), \vartheta M(t), {_\tau}G(t)\right) - {_\tau}M_{ist}(t)\right|^2 .$$

wherein again

t denotes the time coordinate;

$\vartheta$G denotes the gear temperature to be determined;

qG(t) denotes a time-dependent output-side position;

$\vartheta$M(t) denotes the time-dependent motor temperature;

$_T$G(t) denotes a time-dependent output-side torque;

$I_{ist}$(t) denotes a time-dependent actual motor current;

$_T$M$_{soll}$ denotes an input-side setpoint torque;

$_T$M$_{ist}$ denotes an input-side actual torque;

d/dt qG(t) denotes the first derivative of the output-side position according to time, i.e. an output-side speed; and

d/dt$^2$ qG(t) denotes the second derivative of the output-side position according to time, i.e. an output-side acceleration.

**13.** A method according to claim 11 or claim 12, **characterised in that** the most recently determined gear temperature value is used as the starting value for numerical minimisation of the expression.

**14.** A method according to any one of the preceding claims, **characterised in that** values of setpoint variables, such as of a motor current or a motor position, arising during advance planning of a sequence of changing manipulator positions, in particular with regard to the geometry, time profile and speeds of a movement, are determined using the gear temperature.

**15.** A method according to claim 14, **characterised in that**, before the start of interpolation of a corresponding position sequence, replanning takes place if a time has passed between the advance planning and the interpolation which exceeds a predetermined time threshold.

**16.** A method according to any one of the preceding claims, **characterised in that** values of setpoint variables, such as of a motor current or a motor position, arising during interpolation of manipulator positions and/or during closed-loop control, are determined using the gear temperature.

**17.** A device for closed- or open-loop control of an automatically controlled manipulator, such as in particular of a robot (RO), which comprises a number of axes and a number of motors (M1 - Mn) and gears (G1 - Gn) for the movement thereof, with a control unit (SE), which is designed to use a dynamic manipulator model taking account of friction torques arising in the gears, a model for a relevant gear friction torque being provided for at least one axis on the basis of output-side axis speeds and axis accelerations and being usable by the control unit to determine setpoints, such as a motor position or a motor current,

**characterised by** at least one determining means (AL, MO) for a gear temperature ($\vartheta$G, $\vartheta$G\*), which is in operative connection with the control unit (SE) and whose output signal may be evaluated in the control unit (SE) to determine the gear friction torque ($_T$RG).

**18.** A device according to claim 17, **characterised in that** the temperature determining means takes the form of a temperature sensor (GTS1 - GTSn) integrable into the gear (G1 - Gn).

**19.** A device according to claim 17 or claim 18, **characterised in that** the temperature determining means is designed to measure the temperature of the gear oil.

**20.** A device according to claim 17, **characterised in that** a heat conduction model is available in the control unit (SE), the control unit (SE) being designed to determine the heat input into the mechanical structure of the manipulator (RO) in a regular cycle, such that a gear temperature ($\vartheta$G) may be determined approximately from the heat input.

**21.** A device according to any one of claims 17 to 20, **characterised in that** the control unit (SE) is designed to determine the heat input from the actual speed at the gear and the actual temperature at the motor (M1 - Mn).

**22.** A device according to claim 20 or claim 21, **characterised in that**

> a) a means (UTS) is provided for determining an ambient temperature of the manipulator (RO) at specific time intervals; **in that**
> b) the control means (SE) is designed to determine thermal radiation from the manipulator (RO) into the surrounding environment by means of the ambient temperature in a regular cycle; and **in that**
> c) a gear temperature ($\vartheta$G) may be approximately determined from heat input and thermal radiation.

**23.** A device according to any one of claims 17 to 22, **characterised by** a determining means for determining a performance map of the gear friction model ($_T$RG) in accordance with the gear temperatures ($\vartheta$G) from values of input-side actual variables of the manipulator (RO), such as of a motor current ($I_{ist}$) or a motor position ($qM_{ist}$), by means of which a value of the gear temperature ($\vartheta$G, $\vartheta$G*) or a gear friction torque ($_T$RG) may be determined by the control unit (SE) as a function of the input-side actual variables.

**24.** A device according to claim 23, **characterised by** a first storage means (ES) for storing the performance map and the gear friction model ($_T$RG) for subsequent use by the control unit (SE) during regular operation of the manipulator (RO).

**25.** A device according to any one of claims 17 to 24, **characterised by** a second storage means (RP), which is designed for quasi-continuous storing of the values of input-side actual variables of the manipulator (RO), such as a motor current ($I_{ist}$) or a motor position ($qM_{ist}$), at regular time intervals and for holding the values for a predetermined period (T), the period (T) being of a small order of magnitude relative to a time scale for changes in gear temperature ($\vartheta$G).

**26.** A device according to claim 25, **characterised in that** the storage period (T) amounts to approx 0.1s to 1 s, preferably approx 0.5 s.

**27.** A device according to claim 25 or claim 26, **characterised in that** the second storage means (RP) takes the form of a circular buffer.

**28.** A device according to any one of claims 25 to 27, **characterised in that** the control unit (SE) is designed for approximate determination of the gear temperature ($\vartheta$G) in time with a predetermined time interval ($\Delta$T), wherein, for determination purposes, the values stored in the second storage means (RP) may be evaluated at the time (t_ act) of determination.

**29.** A device according to claim 28, **characterised in that** the storage period (T) and the determination time interval ($\Delta$T) are of the same order of magnitude.

**30.** A device according to any one of claims 17 to 29, **characterised in that** the control unit (SE) is designed to determine the gear temperature ($\vartheta$G) by minimising the value of an expression

$$\int_{-act-T}^{-act} \left| I_{soll}\left(\vartheta G; d/dt\, qG(t), d/dt^2\, qG(t), \vartheta M(t), \tau G(t)\right) - I_{ist}(t) \right|^2 w(t)\, dt$$

$$= \int_{-act-T}^{-act} \left| \tau M_{soll}\left(\vartheta G; d/dt\, qG(t), d/dt^2\, qG(t), \vartheta M(t), \tau G(t)\right)/kT - I_{ist}(t) \right|^2 w(t)\, dt$$

$$= \int_{-act-T}^{-act} \left| \begin{array}{c} \left((\tau G + \tau RG)/R - \tau RM\right)_{soll} \times \\ \times \left(\vartheta G; d/dt\, qG(t), d/dt^2\, qG(t), \vartheta M(t), \tau G(t)\right)/kT - I_{ist}(t) \end{array} \right|^2 w(t)\, dt$$

wherein according to $\vartheta G$

t denotes the time coordinate;
t_act denotes a current point in time;
T denotes the storage period;
$I_{soll}$ denotes a setpoint motor current;
$\vartheta G$ denotes the gear temperature to be determined;
qG(t) denotes a time-dependent output-side position;
$\vartheta M(t)$ denotes the time-dependent motor temperature;
$_\tau G(t)$ denotes a time-dependent output-side torque;
$I_{ist}(t)$ denotes a time-dependent actual motor current;
w(t) denotes a time-dependent weighting function;
$_\tau M_{soll}$ denotes an input-side setpoint torque;
kT denotes a proportionality factor in accordance with $_\tau M = k_T \cdot I$
d/dt qG(t) denotes the first derivative of the output-side position according to time, i.e. an output-side speed; and
$d/dt^2$ qG(t) denotes the second derivative of the output-side position according to time, i.e. an output-side acceleration.

31. A device according to any one of claims 17 to 24, **characterised in that** the control unit (SE) is designed to determine the gear temperature ($\vartheta G$) by minimising the value of an expression

$$\left| \tau M_{soll}\left(\vartheta G; d/dt\, qG(t), d/dt^2\, qG(t), \vartheta M(t), \tau G(t)\right) - \tau M_{ist}(t) \right|^2$$

wherein

t denotes the time coordinate;
$\vartheta G(t)$ denotes the time-dependent gear temperature;
qG denotes an output-side position to be determined;
$\vartheta M(t)$ denotes the time-dependent motor temperature;
$_\tau G(t)$ denotes a time-dependent output-side torque;
$I_{ist}(t)$ denotes a time-dependent actual motor current;
$_\tau M_{soll}$ denotes an input-side setpoint torque;
$_\tau M_{ist}$ denotes an input-side actual torque;
d/dt qG(t) denotes the first derivative of the output-side position according to time, i.e. an output-side speed; and
$d/dt^2$ qG(t) denotes the second derivative of the output-side position according to time, i.e. an output-side acceleration.

32. A device according to any one of claims 17 to 31, **characterised by** a time measuring means (ZM) which, in the event of advance planning of a sequence of changing manipulator positions, in particular with regard to the geometry, time profile and speeds of a movement, by the control unit (SE), is designed to effect replanning if a time (t) has passed between the advance planning and interpolation of the position sequence which exceeds a predetermined time threshold.

33. Use of a device according to any one of claims 17 to 32 for advance planning of a sequence of changing manipulator positions, in particular with regard to the geometry, time profile and speeds of a movement, and for determining values of setpoint variables, such as a motor current or a motor position, required to bring about the positions, using the gear temperature.

34. Use of a device according to any one of claims 17 to 32 for the interpolation of manipulator positions and/or of values of setpoint variables arising during closed-loop control, such as of a motor current or a motor position, using the gear temperature.

35. Use of a device according to any one of claims 17 to 32 for monitoring manipulators, in particular with regard to collisions, by comparing setpoint and actual variables, such as a motor current or a motor position, using the gear temperature.

**Revendications**

1. Procédé pour réguler ou commander un manipulateur à commande automatique, tel singulièrement un robot (RO), avec utilisation d'un modèle dynamique de manipulateur tenant compte des couples de friction qui surviennent dans des engrenages (G1,..., Gn) servant à déplacer les axes dudit manipulateur, un modèle étant défini pour au moins un axe pour le couple de friction dans l'engrenage sur la base des vitesses et des accélérations de l'axe côté étage de sortie et étant utilisé pour définir des consignes, telle une position ou une intensité du moteur, ledit procédé étant **caractérisé en ce que** le couple de friction dans l'engrenage est déterminé en fonction d'une température de l'engrenage.

2. Procédé selon la revendication 1, **caractérisé en ce que** les températures de l'engrenage sont mesurées directement.

3. Procédé selon la revendication 2, **caractérisé en ce que** la mesure de la température de l'engrenage a lieu durant une exploitation régulière du manipulateur.

4. Procédé selon une des revendications 2 ou 3, **caractérisé en ce que** la mesure de la température de l'engrenage a lieu avant de commencer l'exploitation régulière du manipulateur.

5. Procédé selon la revendication 1, **caractérisé en ce que**

a) les grandeurs réelles côté entraînement du manipulateur, telle l'intensité, la position ou la température du moteur sont mesurées à des intervalles de temps définis ;
b) l'apport et la conduction thermique dans la structure mécanique du manipulateur, y compris de l'engrenage, sont déterminés en un rythme régulier à l'aide d'un modèle de conduction thermique; et
c) une température de l'engrenage est calculée approximativement à partir de la conduction thermique.

6. Procédé selon la revendication 5, **caractérisé en ce qu'**en outre une température ambiante est déterminée à des intervalles de temps réguliers, et **en ce qu'**à partir de la température ambiante, un rayonnement thermique du manipulateur vers son environnement est déterminé à un rythme régulier, et **en ce que** la température de l'engrenage est déterminée à partir de la conduction thermique et du rayonnement thermique.

7. Procédé selon une des revendications 2 à 6, **caractérisé en ce qu'**au moyen d'une mesure des valeurs des grandeurs réelles du manipulateur côté entraînement, telle l'intensité ou la position du moteur, un diagramme caractéristique du modèle de friction dans l'engrenage est déterminé conformément aux températures de l'engrenage et à l'aide duquel une valeur de la température ou du couple de friction dans l'engrenage est ensuite calculée en fonction des grandeurs réelles côté entraînement.

8. Procédé selon la revendication 7, **caractérisé en ce que** le diagramme caractéristique et le modèle de friction dans l'engrenage sont déterminés avant que ne commence une exploitation régulière du manipulateur et enregistrés en vue d'une utilisation ultérieure.

9. Procédé selon une des revendications 1 à 8, **caractérisé en ce qu'**à des intervalles de temps réguliers, des grandeurs réelles, telle l'intensité ou la position du moteur, sont déterminées quasi en continu côté entraînement et les valeurs desdites grandeurs sont enregistrées pendant une durée donnée, la durée d'enregistrement étant petite en terme d'ordre de grandeur par rapport à une échelle de temps pour les variations de la température dans l'engrenage, et **en ce qu'**une détermination approximative de la température dans l'engrenage a lieu au rythme d'un intervalle de temps donné, les valeurs des grandeurs réelles enregistrées au moment de la détermination étant employées pour la détermination.

10. Procédé selon la revendication 9, **caractérisé en ce que** la durée d'enregistrement et l'intervalle de temps pour la détermination sont choisis dans le même ordre de grandeur.

11. Procédé selon une des revendications 4 à 10, **caractérisé en ce que** pour déterminer la température dans l'engrenage, on minimise la valeur d'une formule

$$\int_{t\_act-T}^{\_act} \left| I_{soll}\left(\vartheta G; d/dt\, qG(t), d/dt^2\, qG(t), \vartheta M(t), \tau G(t)\right) - I_{ist}(t) \right|^2 w(t)\, dt$$

$$= \int_{t\_act-T}^{\_act} \left| \tau M_{soll}\left(\vartheta G; d/dt\, qG(t), d/dt^2\, qG(t), \vartheta M(t), \tau G(t)\right)/k_T - I_{ist}(t) \right|^2 w(t)\, dt$$

$$= \int_{t\_act-T}^{\_act} \left| \begin{array}{c} \left((\tau G + \tau RG)/R - \tau RM\right)_{soll} \times \\ \times\left(\vartheta G; d/dt\, qG(t), d/dt^2\, qG(t), \vartheta M(t), \tau G(t)\right)/k_T - I_{ist}(t) \end{array} \right|^2 w(t)\, dt$$

par rapport à $\vartheta G$, et dans laquelle

t désigne les coordonnées de temps ;
t_act un instant actuel ;
T la durée d'enregistrement ;
$I_{sd}$ une intensité consigne du moteur ;
$\vartheta G$ la température qu'il s'agit de déterminer dans l'engrenage ;
qG(t) une position côté étage de sortie en fonction du temps ;
$\vartheta M(t)$ la température du moteur en fonction du temps ;
$\tau G(t)$ un couple côté étage de sortie en fonction du temps ;
$I_{st}(t)$ une intensité réelle du moteur en fonction du temps ;
w(t) une fonction de pondération en fonction du temps ;
$\tau M_{soll}$ un couple consigne côté entraînement ;
$k_T$ un coefficient de proportionnalité suivant $\tau M = K_T \cdot I$;
$d/dt\, qG(t)$ la première déduction de la position côté étage de sortie suivant le temps, c'est-à-dire une vitesse côté étage de sortie ; et
$d/dt^2\, qG(t)$ la deuxième déduction de la position côté étage de sortie suivant le temps, c'est-à-dire une accélération côté étage de sortie.

12. Procédé selon une des revendications 4 à 8, **caractérisé en ce que** pour déterminer la température de l'engrenage, on minimise la valeur d'une formule

$$\left| \tau M_{soll}\left(\vartheta G; d/dt\, qG(t), d/dt^2\, qG(t), \vartheta M(t), \tau G(t)\right) - \tau M_{ist}(t) \right|^2$$

dans laquelle de nouveau
t désigne les coordonnées de temps ;

$\vartheta G$ la température qu'il s'agit de déterminer dans l'engrenage ;
qG(t} une position côté étage de sortie en fonction du temps ;
$\vartheta M(t)$ la température du moteur en fonction du temps ;
$\tau G(t)$ un couple côté étage de sortie en fonction du temps ; $I_{st}(t)$ une intensité réelle du moteur en fonction du temps ; $\tau M_{soll}$ un couple consigne côté entraînement ;

EP 1 754 115 B1

$_T M_{ist}$ un couple réel côté entraînement ;

d/dt qG(t) la première déduction de la position côté étage de sortie suivant le temps, c'est-à-dire une vitesse côté étage de sortie ; et

$d/dt^2$ qG(t) la deuxième déduction de la position côté étage de sortie suivant le temps, c'est-à-dire une accélération côté étage de sortie.

**13.** Procédé selon une des revendications 11 ou 12, **caractérisé en ce qu'**une valeur de la température de l'engrenage calculée en dernier est employée comme valeur de départ pour la minimisation numérique de la formule.

**14.** Procédé selon une des revendications qui précèdent, **caractérisé en ce que** lors d'une prévision d'une suite de changements de situations du manipulateur, notamment en ce qui concerne la géométrie, le temps écoulé et les vitesses d'un mouvement, les valeurs advenant des grandeurs consignes, telles celles d'une intensité ou d'une position du moteur sont déterminées en utilisant la température de l'engrenage.

**15.** Procédé selon la revendication 14, **caractérisé en ce qu'**une nouvelle disposition a lieu avant le début d'une interpolation d'une suite correspondante de positions si le temps écoulé entre la prévision et l'interpolation dépasse un seuil de temps donné.

**16.** Procédé selon une des revendications qui précèdent, **caractérisé en ce que** les valeurs des grandeurs consignes, telles celles d'une intensité ou d'une position du moteur advenant lors d'une interpolation des situations du manipulateur et/ou lors d'une régulation sont déterminées en utilisant la température de l'engrenage.

**17.** Dispositif pour réguler ou commander un manipulateur à commande automatique, tel singulièrement un robot (RO) présentant un certain nombre d'axes et, pour déplacer lesdits axes, un certain nombre de moteurs (M1, ..., Mn) et de réducteurs (G1,..., Gn), avec une unité de commande (SE), laquelle étant formée pour employer un modèle dynamique de manipulateur en tenant compte des couples de friction qui surviennent dans les engrenages, un modèle étant prévu pour au moins un axe pour un couple de friction concerné de l'engrenage sur la base des vitesses et des accélérations de l'axe côté étage de sortie et pouvant être utilisé par l'unité de commande pour définir des consignes, telle une position ou une intensité du moteur,

**caractérisé par** au moins un dispositif de détermination (AL, MO) agissant conjointement avec l'unité de commande (SE) pour une température dans l'engrenage ($\vartheta$G, $\vartheta$G*), dont le signal de sortie dans l'unité de commande (SE) peut être exploité pour déterminer le couple de friction dans l'engrenage ($_T$RG).

**18.** Dispositif selon la revendication 17, **caractérisé en ce que** le dispositif servant à déterminer la température est formé par un capteur de température (GTS1,... GTSn) pouvant être intégré dans l'engrenage (G1, ..., Gn).

**19.** Dispositif selon une des revendications 17 ou 18, **caractérisé en ce que** le dispositif servant à déterminer la température est formé pour mesurer une température de l'huile d'engrenages.

**20.** Dispositif selon la revendication 17, **caractérisé en ce qu'**un modèle de conduction thermique est disponible dans l'unité de commande (SE), l'unité de commande (SE) étant formée pour calculer l'apport thermique dans la structure mécanique du manipulateur (RO) à un rythme régulier, de sorte qu'à partir de l'apport thermique, il soit possible de déterminer approximativement une température dans l'engrenage ($\vartheta$ G).

**21.** Dispositif selon une des revendications 17 à 20, **caractérisé en ce que** l'unité de commande (SE) est formée pour calculer l'apport thermique à partir de la vitesse réelle sur l'engrenage et de la température réelle sur le moteur (M1,...,Mn).

**22.** Dispositif selon une des revendications 20 ou 21, **caractérisé en ce que**

a) un dispositif (UTS) est prévu pour déterminer une température ambiante du manipulateur (RO) à des intervalles de temps déterminés ; **en ce que**
b) le dispositif de commande (SE) est formé pour calculer un rayonnement thermique du manipulateur (RO) vers son environnement à partir de la température ambiante à un rythme régulier ; et **en ce que**
c) à partir de l'apport et du rayonnement thermique, une température ($\vartheta$ G) puisse être déterminée approximativement dans l'engrenage.

**23.** Dispositif selon une des revendications 17 à 22, **caractérisé par** un dispositif de détermination pour un diagramme caractéristique du modèle de friction dans l'engrenage ($_T$RG) conformément aux températures de l'engrenage ($\vartheta$ G) à partir des valeurs des grandeurs réelles du manipulateur (RO) côté entraînement, telle une intensité ($I_{ist}$) ou une position du moteur ($qM_{ist}$), à l'aide duquel une valeur de la température ($\vartheta$ G, $\vartheta$ G*) ou un couple de friction ($_T$RG) peut être déterminé dans l'engrenage par l'unité de commande (SE) en fonction des grandeurs réelles côté entraînement.

24. Dispositif selon la revendication 23, **caractérisé par** un premier dispositif d'enregistrement (ES) pour le diagramme caractéristique et le modèle de friction ($_T$RG) pour une utilisation ultérieure par l'unité de commande (SE) pendant l'exploitation régulière du manipulateur (RO).

25. Dispositif selon une des revendications 17 à 24, **caractérisé par** un deuxième dispositif d'enregistrement (RP), lequel est formé pour enregistrer quasi continuellement les valeurs des grandeurs réelles du manipulateur (RO) côté entraînement, telle une intensité ($I_{ist}$) ou une position ($qM_{ist}$) du moteur à des intervalles de temps réguliers et pour maintenir ces valeurs pendant une durée déterminée (T), ladite durée (T) étant petite en terme d'ordre de grandeur par rapport à une échelle de temps pour les variations de la température de l'engrenage ($\vartheta$ G).

26. Dispositif selon la revendication 25, **caractérisé en ce que** la durée d'enregistrement (T) soit de quelque 0,1 s à 1 s, de préférence de quelque 0,5 s.

27. Dispositif selon une des revendications 25 ou 26, **caractérisé en ce que** le deuxième dispositif d'enregistrement (RP) soit formé comme une mémoire-tampon.

28. Dispositif selon une des revendications 25 à 27, **caractérisé en ce que** l'unité de commande (SE) est formée pour déterminer approximativement la température de l'engrenage ($\vartheta$G) au rythme d'un intervalle de temps donné ($\Delta$T), les valeurs enregistrées dans le deuxième dispositif d'enregistrement (RP) à l'instant (t_act) de la détermination pouvant être exploitées pour déterminer.

29. Dispositif selon la revendication 28, **caractérisé en ce que** la durée d'enregistrement (T) et l'intervalle de temps ($\Delta$T) pour la détermination sont du même ordre de grandeur.

30. Dispositif selon une des revendications 17 à 29, **caractérisé en ce que** l'unité de commande (SE) est formée pour déterminer la température de l'engrenage ($\vartheta$G) par minimisation de la valeur d'une formule

$$\int_{-act-T}^{-act} \left| I_{soll}\left(\vartheta G; d/dt\, qG(t), d/dt^2\, qG(t), \vartheta M(t), \tau G(t)\right) - I_{ist}(t) \right|^2 w(t)\, dt$$

$$= \int_{-act-T}^{-act} \left| \tau M_{soll}\left(\vartheta G; d/dt\, qG(t), d/dt^2\, qG(t), \vartheta M(t), \tau G(t)\right)/k_T - I_{ist}(t) \right|^2 w(t)\, dt$$

$$= \int_{-act-T}^{-act} \left| \begin{array}{c} \left((\tau G + \tau RG)/R - \tau RM\right)_{soll} \times \\ \times \left(\vartheta G; d/dt\, qG(t), d/dt^2\, qG(t), \vartheta M(t), \tau G(t)\right)/k_T - I_{ist}(t) \end{array} \right|^2 w(t)\, dt$$

dans laquelle suivant $\vartheta$G,

t désigne les coordonnées de temps ;
t_act un instant actuel ;
T la durée d'enregistrement ;
$I_{sd}$ une intensité consigne du moteur ;
$\vartheta$G la température qu'il s'agit de déterminer dans l'engrenage ;
qG(t) une position côté étage de sortie en fonction du temps ;
$\vartheta$M(t) la température du moteur en fonction du temps ;
$_T$G(t) un couple côté étage de sortie en fonction du temps ;
$I_{ist}$(t) une intensité réelle du moteur en fonction du temps ;
w (t) une fonction de pondération en fonction du temps ;
$_T$M$_{soLL}$ un couple consigne côté entraînement ;

$k_T$ . un coefficient de proportionnalité suivant $_TM = k_T.I$ ;

d/dt qG(t) la première déduction de la position côté étage de sortie suivant le temps, c'est-à-dire une vitesse côté étage de sortie ; et

$d/dt^2$ qG(t) la deuxième déduction de la position côté étage de sortie suivant le temps, c'est-à-dire une vitesse côté étage de sortie.

31. Dispositif selon une des revendications 17 à 24, **caractérisé en ce que** l'unité de commande (SE) est formée pour déterminer la température dans l'engrenage ($\vartheta$G) par minimisation de la valeur d'une formule

$$\left| {}_\tau M_{soll}\left(\vartheta G; d/dt\, qG(t), d/dt^2\, qG(t), \vartheta M(t), \tau G(t)\right) - {}_\tau M_{ist}(t)\right|^2$$

dans laquelle

t désigne les coordonnées de temps ;

$\vartheta$G(t) la température dans l'engrenage en fonction du temps ;

qG une position à déterminer côté étage de sortie ;

$\vartheta$M(t) la température du moteur en fonction du temps ;

$_T$G(t) un couple côté étage de sortie en fonction du temps ; $I_{ist}$(t) une intensité réelle du moteur en fonction du temps ; $_TM_{soll}$ un couple consigne côté entraînement ;

$_TM_{ist}$ un couple réel côté entraînement ;

d/dt qG(t) la première déduction de la position côté étage de sortie suivant le temps, c'est-à-dire une vitesse côté étage de sortie ; et

$d/dt^2$ qG(t) la deuxième déduction de la position côté étage de sortie suivant le temps, c'est-à-dire une vitesse côté étage de sortie.

32. Dispositif selon une des revendications 17 à 31, **caractérisé par** un dispositif chronomètre (ZM), lequel est formé, lors d'une prévision d'une suite de changements de situations du manipulateur, notamment en ce qui concerne la géométrie, le temps écoulé et les vitesses d'un mouvement par l'unité de commande (SE) pour provoquer une nouvelle disposition si un temps (t) écoulé entre la prévision et une interpolation de la séquence de situations dépasse un seuil de temps donné.

33. Utilisation d'un dispositif selon une des revendications 17 à 32 pour la prévision d'une suite de changements de situations du manipulateur, notamment en ce qui concerne la géométrie, le temps écoulé et les vitesses d'un mouvement, et pour déterminer les valeurs des grandeurs réelles, telle celle de l'intensité ou de la position du moteur, nécessaires pour réaliser les situations en utilisant la température de l'engrenage.

34. Utilisation d'un dispositif selon une des revendications 17 à 32 pour interpoler les situations d'un manipulateur et/ou des valeurs des grandeurs consignes, telles celles d'une intensité ou d'une position du moteur survenant lors d'une régulation.

35. Utilisation d'un dispositif selon une des revendications 17 à 32 pour surveiller des manipulateurs, notamment en ce qui concerne les collisions par comparaison des grandeurs réelles et consignes, telles celles d'une intensité ou d'une position du moteur en utilisant la température de l'engrenage.

Interpreter /
Compiler ~ IC

Programmbewegungen | Interrupt-Bewegungen
Handverfahrbewegungen

Bewegungsplanung ~ BP

Geometrische Bahn und
Geschwindigkeitsprofil

Interpolation ~ IP

Achswinkel, Stromvorgabe

Antriebsschnittstelle ~ AS

Regelung ~ RE

Fig. 1

Fig. 2a

$\tau G$

d/dt q

Fig. 2b

$\tau G$

d/dt q

Fig. 2c

$\tau G$

d/dt q

Fig. 2d

$\tau G$

d/dt q

RO  PS  TS  IS  BS

Positionsvorgabe
Stromvorgabe

| Roboter | Steuerung |

M1

Motor 1

Positionssensor

Temperatursensor

G1

Gn

Motor n

Mn

Motor
Temperatur,
Motorposition

Interner (flüchtiger)
Speicher

Betriebssystem
Steuerungskern

Anwenderprogramme

AP

Externes
Speichermedium

Meßdaten  MD

Modell

Mo

Getriebe-
Temperatursensor 1

GTS1

Getriebe-
Temperatursensor n

GTSn

Getriebetemperatur

SE  ES

**Fig. 3**

29

Ro
M1
PS
TS

Roboter

Motor 1

Positionssensor

Temperatursensor

$\vartheta M_1$

Motor n

Mu
G1

$\vartheta M_n$

Getriebe-
Temperatursensor 1

$\vartheta G_1$

Getriebe-
Temperatursensor n

$\vartheta G_n$

GTS1  GTSn  Gn

Ist-
Werte:
Motor
Tempe
ratur
Motor-
position

Ist-
Werte:
Getriebe
Tempe
ratur

Soll-Werte:
Positionsvorgabe
Stromvorgabe

AP
tM

P

BS  IS  SE

Steuerung

Interner (flüchtiger)
Speicher

Betriebssystem
Steuerungskern

Anwenderprogramme

Algorithmen zur
Planung, Interpolation,
Regelung

Modell mit
Verwendung der
Getriebetemperatur

AL  MO
ES

P

# Fig. 4

**Fig. 5**

## Fig. 6a

$d/dt^2\ q$

Beschleunigung / Zeit [sec] / $t$

$d/dt\ q$

Geschwindigkeit / Zeit [sec] / $t$

## Fig. 6b

## Fig. 6c

## Fig. 6d

**Fig. 6e**

UTS

RO

M₁

PS

Roboter

Motor 1

Positionssensor

Temperatursensor

. . .

Motor n

TS

Mₙ

P

Soll-Werte:
Motorposition
Motorstrom

P

Ist-Werte:
Motor-
Temperatur
Motorposition

$\vartheta M, qM$

$\vartheta M, qM$

TH

Ist-Wert:
Umgebungstemperatur

IS

Steuerung

Interner (flüchtiger)
Speicher

Berechnung des
Wärmeflusses und
Energieeintrags in
die Roboterstruktur

$\vartheta G^*$

Geschätzte
Getriebetemperatur

$tM$

Algorithmen zur
Planung, Interpolation,
Regelung

Modell mit
Verwendung der
Getriebetemperatur

AL

MO

**Fig. 7**     SE

**EP 1 754 115 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Olsson, Åström ; C. Canudas ; Wit, M. Gäfvert ; P. Lischinsky.** Friction Models and Friction Compensation. *European Journal of Control,* 1998, vol. 29 (4), 176-195
- **H. Olsson ; KJ Åström ; C. Canudas ; de Wit ; M. Gäfvert ; P. Lischinsky.** riction Models and Friction Compensation. *European Journal of Control,* 1998, vol. 29 (4), 176-195
- **Charles Lawson ; Richard Hanson.** Solving Least Squares Problems. Prentice-Hall, 1974
- Newton Methods for Nonlinear Problems. Affine Invariance and Adaptive Algorithms. **P. Deuflhard.** Series Computational Mathematics. Springer, 2004, vol. 35